# FASCICULE DE BREVET EUROPEEN

(11) **EP 4 189 766 B1**
(45) Date de publication et mention de la délivrance du brevet: **18.12.2024**
(21) Numéro de dépôt: 21752003.0
(22) Date de dépôt: 23.07.2021
(51) Int. Cl.: H01M 10/42, H01M 10/633, H01M 10/6571, H01M 50/213, H01M 50/244, H01M 50/258, H01M 50/519, H01M 50/574, H01M 10/48

(54) **BLOC MODULAIRE SÉRIE (BLMOSE)**
MODULARES, IN SERIE GESCHALTETES BATTERIEPACK (BLMOSE)
MODULAR SERIES-CONNECTED BATTERY PACK (BLMOSE)

(30) Priorité: 27.07.2020 FR 2007906
(43) Date de publication de la demande: 07.06.2023
(73) Titulaire: Limatech, 31300 Toulouse (FR)
(72) Inventeur: POUYADOU, Luc, 31190 Brignoud (FR); DI MEGLIO, Maxime, 31650 Saint Orens (FR); ROBIN, Florence, 31650 Saint Orens (FR)
(74) Mandataire: AtlantIP International
(86) Numéro de dépôt international: PCT/EP2021/070670
(87) Numéro de publication internationale: WO 2022/023200

(56) Documents cités:
- KR-A- 20200 020 565
- US-A1- 2010 255 355
- US-A1- 2017 025 717
- US-A1- 2017 133 723

## Description

### DOMAINE TECHNIQUE ET OBJET DE L'INVENTION

La présente invention concerne des batteries lithium et un bloc modulaire série (BIMoSe) constitué de cellules d'accumulateurs lithium.

### ETAT DE LA TECHNIQUE

Il est connu dans l'état de la technique par exemple par la demande WO 2010/145230 A1 une architecture modulaire externe dans laquelle X batteries sont couplées à un bus externe permettant la remontée des données vers un superviseur.

Selon un autre art antérieur, la demande de brevet WO2020064221 A1 enseigne un système de batterie utilisant un procédé pour détecter une autodécharge anormale dans un système de batterie comprenant une pluralité de cellules lithium-ion et un dispositif de gestion de batterie (BMS, battery management system en anglais, désigné BCU sur les figures), dans lequel les cellules sont chacune dotées d'un circuit (CSC) de supervision de cellules ou modules de cellules supervisant l'équilibrage individuellement ou en groupes, et le dispositif de gestion de batterie est configuré pour qu'au moment prédéterminé où une cellule ou un groupe de cellules, dont la tension de cellule est comparée à au moins une autre cellule ou un groupe de cellules et est augmentée, actionne le circuit d'équilibrage vers cette cellule ou ce groupe de cellules à prendre en charge, et éventuellement supprime la charge d'une autre cellule ou fournit un groupe de cellules avec une tension de cellule inférieure jusqu'à ce que les tensions de cellule soient égalisées.

En cas d'écarts ponctuels ou sporadiques, seul une entrée peut être effectuée dans la mémoire de défauts du BCU, qui marque la cellule à contrôler lors de la prochaine maintenance du système de batterie.

Dans le cas d'écarts fréquents et plus forts, la cellule peut par exemple être marquée pour un échange prochain et le BMS transmet un message correspondant via un canal de communication, par exemple un bus CAN, vers le système dans lequel le système de batterie est installé, par exemple un véhicule électrique.

Dans le pire des cas, en cas d'écarts très importants par rapport à la valeur de consigne et/ou d'écarts qui deviennent de plus en plus importants, le BMS peut également arrêter la cellule ou le module dans lequel la cellule est installée afin d'éviter une nouvelle détérioration et l'apparition d'un court-circuit interne.

Toutefois, ce document n'enseigne pas l'arrêt d'un groupe de cellules sur détection d'une température élevée. De plus les cellules sont chacune pourvues d'un circuit d'équilibrage individuellement ou en groupes, mais les autres fonctionnalités d'un circuit de gestion ne sont pas prévues et enfin l'organe de décision et mémorisation BCU est déporté.

Il existe la demande de brevet CA 3044454 A1 qui enseigne un ensemble de batteries comprenant plusieurs groupes de cellules connectés en série uniquement comprenant un mécanisme de commande dans lequel le mécanisme de coupure est en position opérationnelle lorsqu'il est alimenté et en position de détournement d'un groupe de cellules lorsqu'il n'est pas alimenté. Cette demande de brevet enseigne également la détection de court-circuit par un capteur de courant, la détection d'une augmentation de température dans les cellules, la détection d'une surtension ou d'une sous-tension ou d'une température dépassant un seuil de température pour effectuer une ouverture d'un contact produisant un contournement d'un ensemble de batteries. Le BMS est configuré pour recevoir une alimentation extérieure, pour communiquer des signaux analogues et digitaux et communiquer avec des services externes.

Ce dispositif présente l'inconvénient de nécessiter un capteur de courant. En outre le mécanisme de coupure est en position opérationnelle lorsqu'il est alimenté et en position de détournement lorsqu'il n'est pas alimenté. L'inconvénient d'un tel dispositif est de provoquer un détournement d'un groupe de cellules si le mécanisme de coupure cesse d'être alimenté par une défaillance du circuit et non pas suite à une détection de dépassement d'une température.

De plus, le dispositif n'est pas alimenté lorsqu'il est en position opérationnelle, d'autre part il concerne uniquement un groupement de modules en série pour introduire ou enlever un module du groupe selon certaines conditions.

On connaît aussi la demande de brevet US 2016185251 A1 qui enseigne un dispositif de chauffage de batterie par courant électrique créant un courant bi directionnel dans la batterie en créant des phases de charge et décharge ce qui a pour résultat de faire monter la température de la batterie.

Toutefois, un tel dispositif présente l'inconvénient de devoir être en situation de pouvoir créer les phases de charges. En effet les phases de décharges peuvent être obtenues en mettant la batterie en circuit avec un dispositif consommateur de courant, mais pour les phases de charges il faut nécessairement un générateur qui ne peut être opérationnel que si les moteurs du véhicule ou de l'avion fonctionnent. Ce système ne permet pas de réchauffer la batterie à froid avant le démarrage pour obtenir le maximum de puissance.

Il existe également la demande de brevet WO 2018095039 A1 qui décrit un système de gestion de batterie intelligent à distance, comprenant : au moins deux blocs de batterie, un centre d'analyse de données et un moniteur de terminal. Chaque bloc de piles est équipé d'un ensemble de piles au lithium, d'un module de système de gestion des piles (BMS), d'un module de communication GPS et d'un module de communication 4G. Le module BMS est utilisé pour obtenir les données du jeu de batteries au lithium et pour gérer le jeu de batteries au lithium ; le module GPS est utilisé pour obtenir les données de localisation des informations géographiques du jeu de batteries au lithium ; le module de communication 4G est utilisé pour transmettre les données du jeu de batteries au lithium et les données de localisation des informations géographiques au centre d'analyse des données au moyen d'une station de base ; le centre d'analyse des données est doté d'un centre de test des données, d'un centre de stockage des données et d'un centre d'analyse des batteries d'intelligence artificielle basé sur le Cloud. Le système de gestion de batteries intelligent à distance peut ajuster en temps réel une politique de gestion d'un BMS, et contrôler les conditions de charge et de décharge des ensembles de batteries au lithium, de sorte que la sécurité des batteries est grandement améliorée. En déterminant les conditions de fonctionnement des ensembles de batteries au lithium, les coûts de communication après-vente sont réduits, et le taux d'utilisation et le taux de réparation des ensembles de batteries au lithium sont améliorés.

Dans ce dispositif le module de gestion de piles sert uniquement à collecter les mesures et les envoyer à un centre d'analyse des données qui fait donc la détection et la décision de gestion des Piles.

On connaît aussi la demande de brevet CN 110600641 A qui enseigne un module système 48 V de batterie lithium comportant un module de 12 cellules, un BMS, des plaques de refroidissement par eau et des éclisses formées dans au moins une plaque en contre-plaqué présentant des ouvertures de la taille et de la forme des cellules.

Un tel dispositif enseigne un système modulaire avec des plaques en contre plaqué et des plaques de refroidissement par eau. Il ne prévoit pas de chauffage des cellules bien au contraire.

L'art antérieur comprend également la demande de brevet CN 109659990 A qui divulgue un système de surveillance et de gestion de la sécurité des batteries au lithium pour les véhicules électriques comprenant un BMS, un serveur en nuage (Cloud) et un terminal mobile APP ; le BMS comprend une micro-unité de contrôle, un module d'acquisition, un module de contrôle de la charge et de la décharge et un module de gestion des transmissions sans fil. Le module d'acquisition, le module de contrôle de la charge et de la décharge et le module de gestion de la transmission sans fil sont connectés électriquement à la micro-unité de contrôle ; le module d'acquisition comprend un capteur de tension, un capteur de courant et un capteur de température, qui sont utilisés pour collecter la tension, le courant et la température de la batterie pendant l'utilisation. Le module de contrôle de la charge et de la décharge effectue le contrôle de la charge et de la décharge en fonction des informations de la batterie collectées par le module de collecte ; le BMS est connecté de manière formelle au serveur en nuage par l'intermédiaire du module de gestion de la transmission sans fil ; le terminal mobile APP est connecté de manière formelle au serveur en nuage. Le BMS comprend en outre un module de protection de sécurité, le module de protection de sécurité est connecté électriquement à la micro-unité de contrôle, qui est utilisée pour apparaître dans le bloc de batteries. Dans des conditions anormales de surcharge, de décharge, de surintensité, de surchauffe et de basse température, il alarme et coupe la sortie du bloc de batteries vers la charge. Un tel dispositif nécessite un terminal et un serveur dans le nuage (cloud) pour fonctionner. Il nécessite également un capteur de courant.

On connaît aussi la demande de brevet CN 110048178 A qui concerne un dispositif et une méthode de détection de court-circuit dans une batterie, en enregistrant plusieurs fois la puissance d'équilibre cumulée de chaque cellule de la batterie dans l'état d'équilibre de la batterie, et en enregistrant l'heure de début de chaque équilibre de la batterie. En enregistrant en continu les données du processus d'égalisation n fois, et en détectant le court-circuit interne. Un tel dispositif nécessite une capacité mémoire suffisante et des calculs.

Enfin, la demande de brevet KR 102065679 A enseigne un circuit de protection extérieur à la batterie et un circuit de détection de limitation de sur-décharge et surcharge utilisant des transistors MOS, des comparateurs et un pont de résistance pour fournir une tension de référence V_{ref}.

Cependant, les solutions de l'art antérieur présentent des inconvénients car elles ne permettent pas à la batterie de rester fonctionnelle, en délivrant un courant maximum inférieur mais sans que la tension de la batterie série-parallèle soit changée. De plus, les solutions proposées décrivent des architectures modulaires externes qui multiplient les câblages plutôt qu'une architecture interne à la batterie.

D'autres modules de batteries qui comportent des systèmes de gestion ou BMS sont divulguées par les demandes de brevet US2010255355 A1, US2017133723 A1, US2017025717 A1 et KR20200020565 A.

L'invention vise donc à résoudre un ou plusieurs de ces inconvénients en proposant un bloc modulaire série (BIMoSe), de constitution simple et économique tout en intégrant les fonctionnalités de sécurité de fonctionnement du bloc.

### PRESENTATION GENERALE DE L'INVENTION

Pour parvenir à ce résultat, la présente invention concerne un bloc modulaire série (BIMoSe) constitué de cellules d'accumulateurs lithium disposées selon une direction verticale (V), ces cellules de mêmes caractéristiques sont reliées en série par des connexions selon une direction donnée (S) correspondant au sens des courants pour obtenir la tension nécessaire,
Le bloc modulaire série comprenant selon la même direction (V) une paire d'éléments supérieur et inférieur de maintien de cellules adjacentes et perpendiculairement à la direction (S) ;
Des languettes larges relient, sur chaque face supérieure ou inférieure du module, chaque paire de cellules adjacentes montées en série chacune avec la suivante par leurs pôles de polarité opposés, selon la direction (S), et assurent les connexions entre les cellules d'accumulateur, lesdites languettes larges de chaque face supérieure, respectivement inférieure, étant décalées d'une cellule sur l'autre face inférieure, respectivement supérieure ;
Les connexions étant reliées également à un circuit de traitement pour mesurer les potentiels de chaque cellule, le circuit étant monté sur un ensemble de circuit imprimé formant trois surfaces disposées en U, c'est-à-dire avec deux surfaces supérieure et inférieure parallèles entre elles et reliées entre elles à une extrémité par une surface centrale qui leur est perpendiculaire, lesdites surfaces étant sensiblement planes et les jonctions entre les surfaces étant arrondies ou non. Cet ensemble en forme de U enveloppe l'ensemble modulaire de batteries sur trois côtés. Ledit ensemble en forme de U est disposé de sorte que la perpendiculaire (ou la normale) à la partie centrale du U est perpendiculaire à la direction (S) et à la direction (V) et,
la partie supérieure de la partie centrale du U (c'est-à-dire la face de la partie centrale qui est à l'extérieur du U, dite face externe) comporte l'électronique du système de gestion du bloc modulaire (BIMoSe) ;
La carte, formant la partie centrale du U, disposée verticalement comportant les résistances de réchauffement du bloc modulaire et ces résistances étant connectées sur commande du circuit de gestion à une ou plusieurs cellules d'accumulateur du bloc modulaire pour leur alimentation ;
La partie inférieure du U disposée sous les cellules contribuant avec la partie supérieure du U au moins à la récupération des potentiels de chacune des cellules du bloc modulaire pour les fournir au circuit de gestion des tensions du système de gestion du bloc modulaire.

Dans un mode de réalisation, la partie centrale comporte des sondes de températures et un thermostat.

Selon un mode de réalisation, le contact ouvert/fermé d'un organe de coupure est relié d'une part au pôle positif ou négatif de chaque dernière cellule d'accumulateur d'un bloc modulaire et d'autre part à la cosse respectivement positive ou négative de la batterie, l'organe de coupure étant un MOSFET ou un élément électromagnétique.

Ainsi ce mode de réalisation améliore la stratégie de tolérance à la panne. En effet l'homme du métier sait que n'importe quel système peut, un jour défaillir, cela même avec des sécurités de fonctionnement élevé. Un point intéressant de l'architecture modulaire pour une batterie à plusieurs modules est de pouvoir isoler électriquement un module montrant des défaillances (permettant ainsi au véhicule de finir son trajet avec le minimum de dégât, s'il manque une ligne d'accumulateur, le conducteur voit un défaut batterie mais il continue à avoir de l'électricité dans le véhicule).

Un module unitaire pose un problème sur l'échange des données entre modules (aussi bien les informations et commandes de niveau de sécurité que celles au niveau monitoring des données).

Ainsi un autre but de l'invention est de proposer une solution à ce problème.

Selon ce but, chaque carte BMS de chaque bloc modulaire comporte un bus numérique et un bus analogique reliés à une connectique permettant de relier entre eux les bus d'une pluralité de cartes BMSₙ appartenant à une pluralité de blocs modulaires (BlMoSeₙ) puis avec un système superviseur (SU) de l'ensemble de la pluralité de blocs modulaires.

Selon un autre mode de réalisation, le nombre de cellules en série sur une ligne est à choisir, de 1 à x en fonction de la tension souhaitée, la tension maximale souhaitée étant supportée par les composants utilisés dans l'organe de coupure ou la carte BMS.

Dans un autre mode de réalisation, les éléments de maintien sont des drageoirs maintenus par des entretoises et délimitant un ensemble de logements cylindriques à section circulaire ou carrée ou polygonale définissant sur chaque drageoir supérieur ou inférieur une ligne de logements recevant chacun une cellule ;

Les languettes forment avec des broches élastiques, par exemple type pogo, (appelées pogo pin), un T dont la barre centrale constitue la liaison entre les cellules et le circuit de traitement pour la récupération des potentiels par la carte supérieure et inférieure.

Ainsi en fixant les cartes supérieures et inférieures sur les entretoises le maintien des languettes sur les cellules est assuré par les broches élastiques.

Ainsi l'assemblage du bloc modulaire peut se dispenser de l'utilisation des techniques de soudures à l'étain qui peuvent poser des problèmes de fiabilité des contacts, lorsque le bloc modulaire est soumis à des vibrations.

L'invention concerne également une batterie série-parallèle utilisant des blocs modulaires série tel que brièvement décrits ci-dessus, une pluralité de blocs modulaires série BIMoSe étant assemblés en rang côte à côte et reliés entre eux par deux barres de puissance dont l'une est reliée à chacun des pôles positifs de chaque bloc modulaire et à la cosse externe négative du boitier de batterie et une connexion inter carte permet de relier entre eux les bus de chaque carte pour former une batterie série-parallèle connectée à un superviseur interne au boitier de batterie constitué d'un microprocesseur et d'un programme applicatif et reliée à d'autres équipements par une connectique.

Dans un mode de réalisation, sur détection d'une température trop élevée d'un module par la carte BMS d'un bloc modulaire, cette dernière commande la déconnexion du rang d'accumulateur électrique concerné en ouvrant l'organe de coupure pour créer un mode de fonctionnement dégradé en courant pour l'ensemble de batterie série-parallèle, et envoie par le superviseur un message d'alerte à l'utilisateur (conducteur du véhicule ou pilote) ; puis si la température du module diminue après ouverture du circuit, une information de baisse de température est envoyée à l'utilisateur. Ceci permet à la batterie de rester fonctionnelle en cas de surchauffe, sans que la tension de batterie série-parallèle soit changée et éventuellement d'indiquer que l'incident était passager pour permettre une meilleure analyse de l'incident.

Selon un autre mode de réalisation, l'organe de coupure est relié à une barre connectée à une ligne de pôle adjacente au pôle positif de l'ensemble, cette barre jouant le rôle de radiateur passif d'évacuation de la chaleur des cellules par ses dimensions choisies en conséquence.

Selon un autre mode de réalisation, pour une batterie 12 V, 15 Ah, la batterie série-parallèle est constituée de m rang de blocs modulaires série connectés en parallèle, chacun des blocs modulaires étant constitué de n cellules lithium assemblées en série (nSmP), nS désignant le nombre d'accumulateurs électriques série et mP désignant le nombre de lignes parallèles.

L'invention concerne également un ensemble de batteries série-parallèle tel que brièvement décrits ci-dessus, les cellules choisies étant des éléments au lithium de 3,3 V chacun et 2,5 Ah.

Dans un mode de réalisation, chaque module du bloc modulaire série comporte un ensemble de trois cartes électroniques reliées entre elles, assurant une fonction « BMS », de gestion des éléments d'un bloc modulaire, élargie pour disposer en fonctionnement dit normal d'une ou plusieurs des fonctionnalités suivantes :
Equilibrage de la tension des cellules ;
Comparaison des seuils de tension de chaque accumulateur électrique ;
Alimentation des réchauffeurs d'accumulateur électrique en cas de température négative ;
Mesure de la température du module gérée par la carte BMS ;
Protection contre les courts-circuits par détection de court-circuit et protection contre une décharge lente et profonde par détection d'une décharge lente et profonde, et ouverture de l'organe de coupure constitué soit d'au moins un MOSFET, soit d'un élément électromagnétique ;
Limitation du courant de charge par ouverture du circuit de charge de façon à préserver la longévité des accumulateurs électriques ;
Calcul de l'état de charge et de santé des accumulateurs électriques ;
Dialogue avec le circuit pour lui transmettre les informations suivantes :
   Alerte ;
   SOH;
   ON;
   OFF ;
   Ou exécuter les ordres suivants reçus du superviseur :
      ON;
      OFF ;
      Mise en route du réchauffeur.

Ainsi une seule carte BMS globale permet de surveiller, détecter et déclencher soit une action soit une information vers le superviseur ou les deux à la fois.

Dans un autre mode de réalisation, la batterie série-parallèle sur détection par le superviseur d'un défaut d'équilibrage des courants entre modules par observation par le superviseur d'une ligne d'accumulateur électrique avec un courant hors limite, un écart trop important avec les autres indiquant que cette ligne fatigue, déclenche par le superviseur l'envoi d'un message « maintenance » de la batterie au conducteur du véhicule ou au pilote, permettant de vérifier l'état de la batterie et d'éviter une panne.

Dans un autre mode de réalisation, la carte BMS du bloc modulaire série a les caractéristiques de temps de réaction suivantes :
Détection d'un court-circuit : temps d'ouverture de 75 ms ;
Détection du courant maximum admissible : temps d'ouverture de 10 secondes ;
Détection d'une décharge correspondant à 10 C° : 10 fois la capacité C de la batterie, c'est-à-dire que pour une batterie de 10 Ah, la décharge est à 100 Ah et le temps d'ouverture du circuit est de 5 minutes 30 ;
Détection d'une décharge correspondant à 1 C° : et dans ce cas, le temps d'ouverture du circuit est de 60 minutes.

Selon un autre mode de réalisation, chaque carte BMS intègre une surveillance de la température qui reste constamment active, même si la batterie est sur « OFF », en analysant par le superviseur la température dans l'enveloppe de la batterie, mesurée par une sonde montée sur la partie centrale des cartes de chaque module pour prévenir par un message sur un écran LCD ou par un bip sonore, même lorsque la batterie est sur étagère.

Selon un autre mode de réalisation, chaque carte BMS utilise pour la limitation du courant de charge, un composant de type une résistance, qui est passant dans le sens de la décharge de la batterie et résistif comme une diode montée en opposition dans le sens de charge.

Selon un autre mode de réalisation les cartes BMS utilisent :
Un bus de donnée numérique pour transmettre les signaux entre chaque module :
Un ou plusieurs protocoles de communication permettant :
Le Monitoring de données de chaque module (tension d'équilibrage, température, courant) ;
La Remontée d'alertes ;
Le suivi de l'état de santé, l'état de charge.

Selon un dernier mode de réalisation les circuits de composant sont remplacés là où cela est possible par l'utilisation d'un microcontrôleur dans chaque module et d'un superviseur (soit implémenté dans un des modules soit sur une carte à part mais interne à la batterie) pour permettre :
L'implémentation d'algorithmes innovants, voire de « machine learning ou deep learning » (gestion des pannes).

### PRESENTATION DES FIGURES

D'autres caractéristiques et avantages de l'invention apparaîtront à la lecture de la description détaillée des modes de réalisation de l'invention, donnés à titre d'exemple uniquement, et en référence aux dessins qui montrent :
[Fig. 1] représente un schéma d'une architecture utilisant plusieurs blocs modulaires mis en parallèle par les barres de jonction 3 et 2).
[Fig. 2] représente un schéma d'une architecture mixte série-parallèle
[Fig. 3a] représente un schéma d'un circuit de gestion à trois cartes enveloppant un bloc modulaire série à quatre cellules selon l'invention.
[Fig. 3b] représente une coupe d'un bloc modulaire série à quatre cellules selon l'invention.
[Fig. 3c] représente une vue en perspective d'une face d'un bloc modulaire série à quatre cellules selon l'invention.
[Fig. 3d] représente une vue en perspective d'une face opposée d'un bloc modulaire série à quatre cellules selon l'invention.
[Fig. 4a] représente un schéma en perspective d'un bloc modulaire à huit cellules selon l'invention.
[Fig. 4b] représente un schéma en perspective d'une batterie constituée à partir de l'assemblage en parallèle de trois blocs modulaires série selon l'invention.
[Fig. 5] représente un schéma en perspective d'un bloc modulaire selon l'invention.
[Fig. 6] représente le schéma d'un circuit réalisant la fonction de gestion d'une batterie lithium modulaire série selon l'invention.
[Fig.7a] représente un mode de réalisation du circuit de détection par mesure de tension des conditions (de court-circuit, de surintensité et de décharge profonde) pour déclencher la coupure (disjonction) du bloc modulaire de l'association avec les autres blocs.
[Fig.7b] représente un autre mode de réalisation du circuit de détection par mesure de tension des conditions (de court-circuit, de surintensité et de décharge profonde) pour déclencher la coupure (disjonction) du bloc modulaire de l'association avec les autres blocs.
[Fig. 8] représente un mode de réalisation du circuit de coupure effectuant la coupure en cas de décharge en dessous d'un seuil ou lors d'un court-circuit détecté par le circuit de détection.
[Fig. 9] représente un mode de réalisation du circuit effectuant une coupure à la charge en cas de dépassement, de tension ou de température, détectée par le circuit de détection de la fonction de gestion.
[Fig. 10a], [Fig. 10b], [Fig. 10c] et [Fig. 10d] représentent respectivement l'affichage des évolutions de la tension aux bornes des comparateurs U1 et U2 en cas de surintensité (4A) selon un mode de réalisation pour une batterie de 24,4 Volts et une tension de déclenchement T_{d} de 16 Volts.

### DESCRIPTION DETAILLE D'UNE FORME DE REALISATION DE L'INVENTION

Divers modes de réalisation de l'invention vont maintenant être décrits en référence aux figures, illustratives et non limitatives, de la présent demande.

Les solutions proposées jusqu'à maintenant décrivent des architectures modulaires externes où plusieurs batteries sont couplées à un bus de données externe permettant la remontée des informations à un superviseur.

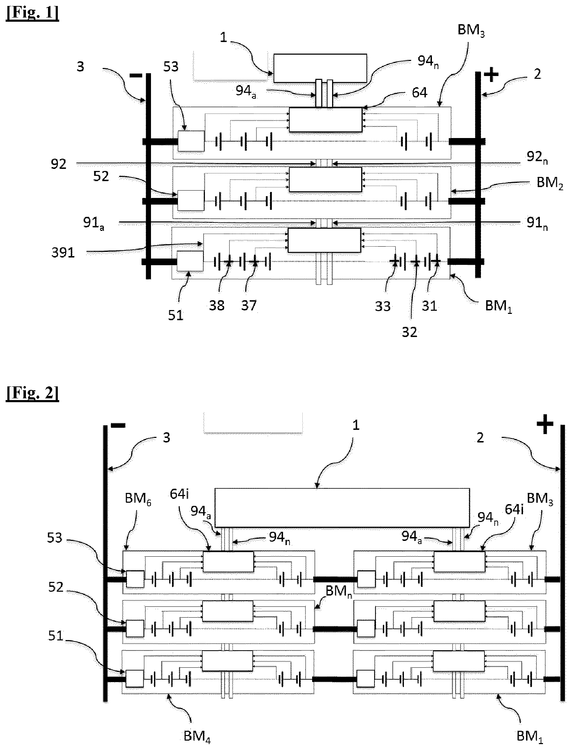

L'architecture proposée par l'invention est au contraire interne à la batterie, et peut être une architecture modulaire parallèle, comme cela est représenté par exemple sur [Fig. 1], ou une architecture modulaire série, comme cela est représenté par exemple sur [Fig. 2].

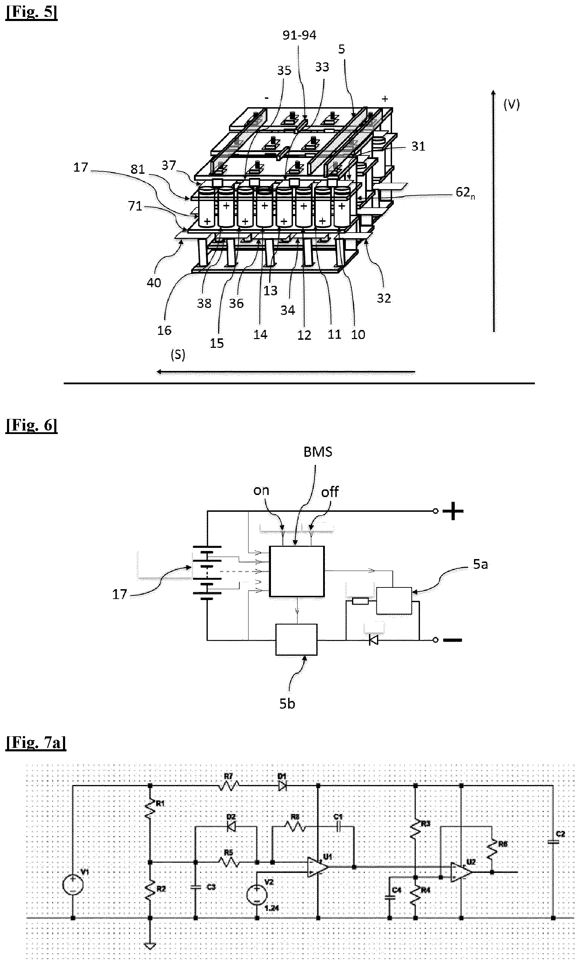

Dans certains modes de réalisation, le bloc modulaire série est constitué de cellules (10, 11, 12, 13, 14, 15, 16, 17, [Fig. 5]) d'accumulateurs lithium de mêmes caractéristiques reliées en série par des connexions selon une direction donnée (S) correspondant au sens des courants pour obtenir la tension nécessaire, comme cela est représenté par exemple sur [Fig. 1] à [Fig. 5].

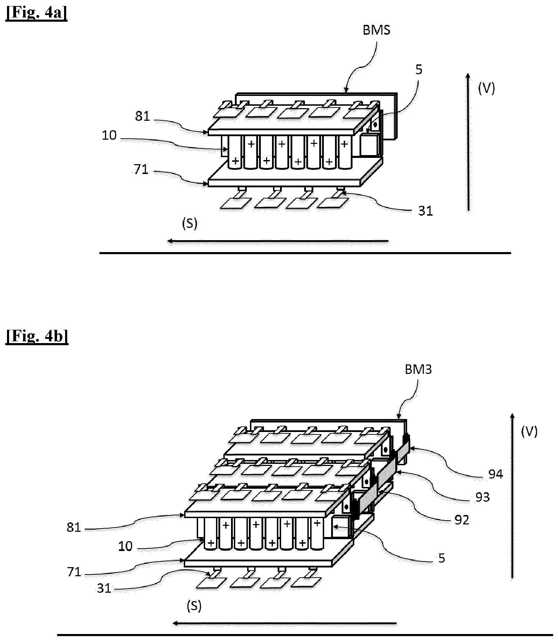

Dans certains modes de réalisation, le bloc modulaire série comprend selon la même direction S une paire d'éléments supérieur (81) et inférieur (71) de maintien de cellules (10, 11, 12, 13, 14, 15, 16, 17) adjacentes et perpendiculairement à la direction (S) selon une direction verticale (V) de bas en haut de la feuille, comme cela est représenté par exemple sur [Fig. 4a], [Fig. 4b] et [Fig. 5].

Dans certains modes de réalisation, des languettes (31-40), larges reliant sur chaque face supérieure ou inférieure du module chaque paire de cellules (10, 11, 12, 13, 14, 15, 16, 17) adjacentes montées en série chacune avec la suivante par leurs pôles de polarité opposés selon la direction (S) assurent les connexions entre les cellules (10, 11, 12, 13, 14, 15, 16, 17) d'accumulateur, lesdites chaque face supérieure, respectivement inférieure, étant décalées d'une cellule sur l'autre face inférieure, respectivement supérieure, comme cela est représenté par exemple sur [Fig. 5]. Sur cette figure la première cellule à droite a son pôle positif disposé vers le haut adjacent au drageoir supérieur (81) tandis que la dernière cellule à gauche du montage série a son pôle positif disposé vers le bas c'est à dire vers le drageoir inférieur (71). Ainsi, comme figuré, les pôles de chaque cellule adjacente d'un bloc modulaire série sont montés avec les orientations des pôles en alternance.

Dans certains modes de réalisation, les connexions sont reliées également à un circuit de traitement pour mesurer les potentiels de chaque cellule, le circuit étant monté sur un ensemble de circuits imprimés formant trois surfaces disposées en U. Comme expliqué précédemment dans la présente demande, ledit ensemble en forme de U (formé par les trois surfaces) étant disposé de sorte que la normale à la surface centrale ou partie centrale du U, parmi lesdites trois surfaces, est perpendiculaire à la direction (S) et à la direction verticale (V) (voir [Fig. 4a]). Ledit ensemble en forme de U enveloppe l'ensemble modulaire de batteries sur trois côtés. La partie supérieure (face externe) de la partie centrale du U, comporte l'électronique du système de gestion (BMSₙ) du bloc modulaire (BlMoSe). Par exemple, et de manière non-limitative, plusieurs blocs modulaires peuvent être assemblés pour constituer une batterie dans laquelle les surfaces centrales ou parties centrales de chaque ensemble en forme de U sont connectées entre elles par des connecteurs (92-94), comme cela est représenté par exemple sur [Fig. 4b].

La partie centrale du U, disposée verticalement (selon la direction V), comporte les résistances de réchauffement du bloc modulaire et ces résistances sont connectées sur commande du circuit de gestion à une ou plusieurs cellules (10, 11, 12, 13, 14, 15, 16, 17) d'accumulateur du bloc modulaire pour leur alimentation.

La partie inférieure du U disposée sous les cellules (10, 11, 12, 13, 14, 15, 16, 17) contribue avec la partie supérieure du U à la récupération des potentiels de chacune des cellules (10, 11, 12, 13, 14, 15, 16, 17) du bloc modulaire pour les fournir au circuit de gestion des tensions du système de gestion du bloc modulaire.

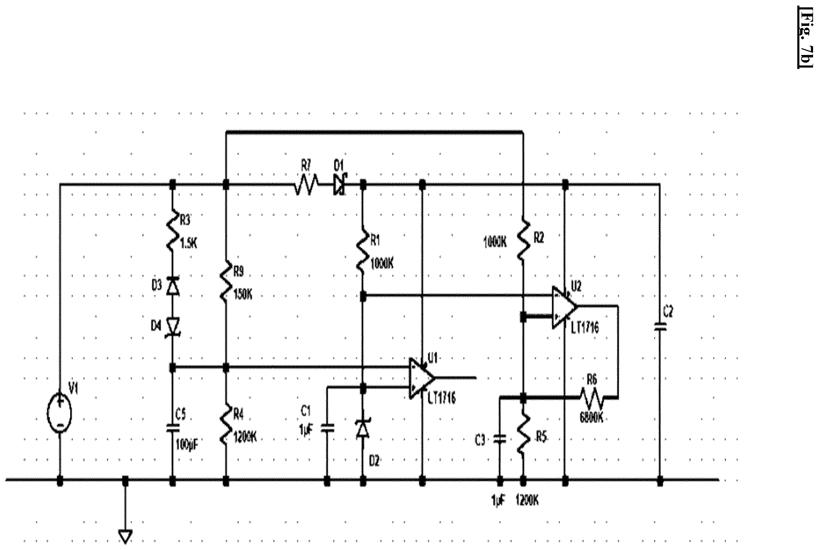

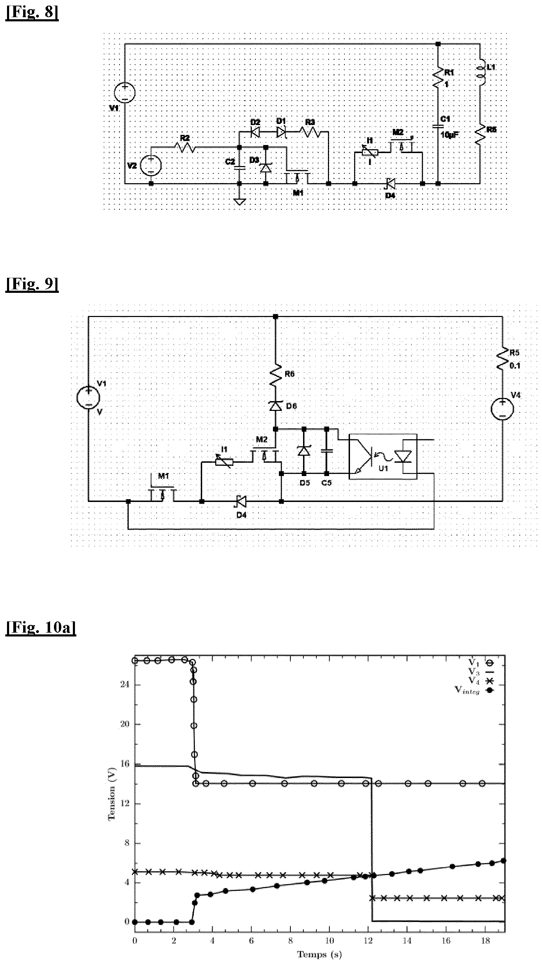

Le nombre d'accumulateurs électriques sur la ligne est choisi de 1 à X, X étant le nombre permettant d'obtenir la tension voulue pour le bloc modulaire à partir de la tension de chaque élément cellulaire. La tension maximale devant être supporté par les composants électroniques, comme cela est représenté par exemple sur [Fig. 7] à [Fig. 9], mis en cause.

Comme représenté sur [Fig. 1] à titre d'exemple, plusieurs bloc modulaires série BM1 à BM3 peuvent être mis en parallèle. Il peut y avoir autant de blocs modulaires série (BIMoSe) mis en parallèle que le protocole de communication entre les circuits le permet. Chaque circuit de gestion (64) d'un bloc modulaire commandant le circuit de disjonction (51 à 53) d'un ensemble de cellules (10, 11, 12, 13, 14, 15, 16, 17) d'un bloc et recevant sur le circuit de détection de tension et commande de [Fig. 6] et [Fig. 7], de chaque cellule d'un bloc modulaire par les connexions (31 à 38), la tension aux bornes de chaque cellule (10, 11, 12, 13, 14, 15, 16,17).

Il est également possible de mettre autant de BlMoSe en série que l'on veut à partir du moment où les composant supportent la tension, comme cela est représenté par exemple sur [Fig. 2].

[Fig. 2] représente un exemple de schéma d'une architecture mixte série-parallèle utilisant plusieurs paires de bloc modulaires associés en série (BM3 avec BM6 ; respectivement BM1 avec BM4) pour former chacune un étage et chaque étage étant relié en parallèle par les barres de contact de puissance (3,2) constituant ainsi une batterie aux caractéristiques techniques différentes. Le lecteur comprendra qu'à partir d'un bloc modulaire série dont le nombre d'éléments unitaires peut varier, on peut réaliser divers bloc modulaires série de tension différente et qu'en assemblant plusieurs blocs modulaires série de même tension en parallèle on peut obtenir des batteries délivrant des courants de valeurs différentes.

Dans certains modes de réalisation, la partie centrale (64) du Bloc modulaire comporte des sondes de températures et un thermostat (102) en plus des résistances chauffantes (62). Les sondes de températures et le thermostat sont reliés au circuit de mesure de température de [Fig. 6]. Les résistances de chauffages (62) sont reliées au circuit de commande de chauffage de la fonction de gestion BMS de [Fig. 6].

La fonction de gestion permet au moins à partir de la mesure de tension et de la température, la surveillance du module, de l'équilibrage des cellules (10, 11, 12, 13, 14, 15, 16, 17) et le déclenchement d'action de coupure sur un dispositif de coupure à la décharge (5b) ou sur un dispositif de coupure à la charge (5a).

Dans certains modes de réalisation, le contact ouvert/fermé d'un organe de coupure (5) est relié d'une part au pôle positif ou négatif de chaque dernière cellule d'accumulateur d'un bloc modulaire et d'autre part à la cosse respectivement positive ou négative de la batterie, l'organe de coupure (5) étant un MOSFET ou un élément électromagnétique, comme cela est représenté par exemple sur [Fig. 1] à [Fig. 4b].

Dans certains modes de réalisation, chaque carte de gestion BMS comporte un bus numérique (94ₙ) et un bus analogique (94ₐ) reliés à une connectique permettant de relier entre eux les bus d'une pluralité de cartes de gestion BMSₙ appartenant à une pluralité de blocs modulaires (BlMoₙ) avec un système superviseur (1) de l'ensemble de la pluralité de blocs modulaires, comme cela est représenté par exemple sur [Fig. 1] et [Fig. 2].

Dans certains modes de réalisation, le nombre de cellules (10, 11, 12, 13, 14, 15, 16, 17) en série sur une ligne est à choisir, de 1 à X en fonction de la tension souhaitée, la tension maximale souhaitée étant supportée par les composants (103) utilisés dans l'organe de coupure (5) ou la carte BMS.

Dans certains modes de réalisation, les éléments de maintien (71, 81) sont des drageoirs maintenus par des entretoises (100) et délimitant un ensemble de logements cylindriques à section carrée ou polygonale définissant sur chaque drageoir supérieur ou inférieur une ligne de logements recevant chacun une cellule ;

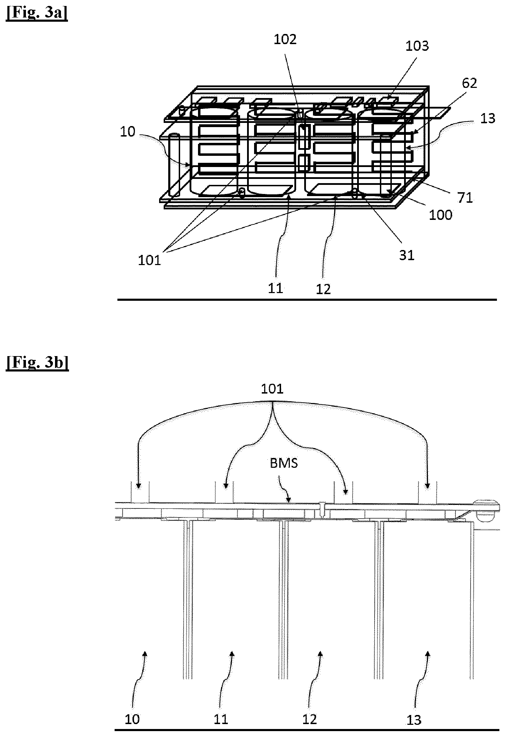

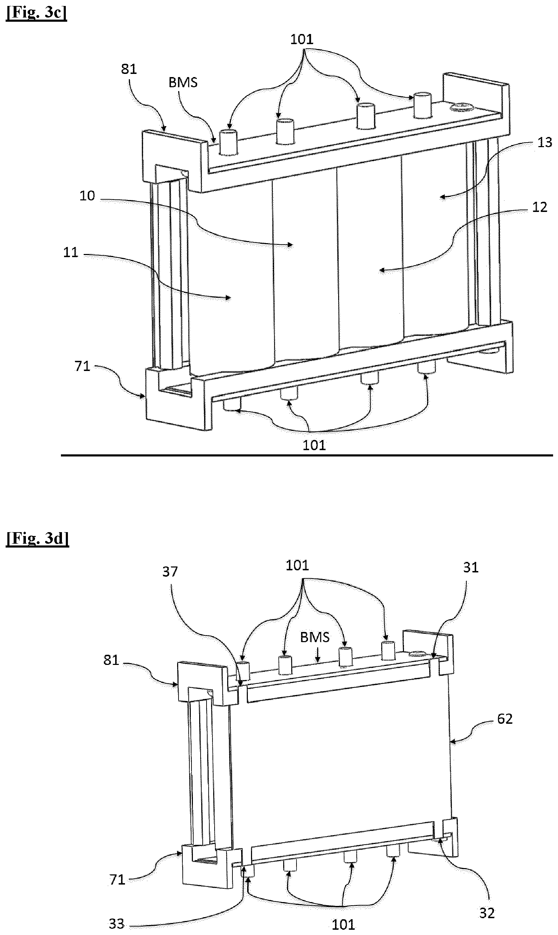

Dans certains modes de réalisation, les languettes forment avec des broches Pogo (101), appelées pogo pin, un T dont la barre centrale constitue la liaison avec le circuit de traitement pour la récupération des potentiels, comme cela est représenté par exemple sur [Fig. 1] et [Fig. 3a] à [Fig. 3d].

L'invention concerne également une batterie série-parallèle utilisant des Blocs modulaires série, une pluralité de blocs modulaires série sont assemblés en rang côte à côte et reliés entre eux par deux barres de puissance dont l'une est reliée à chacun des pôles positifs de chaque bloc modulaire et à la cosse externe négative du boitier de batterie et une connexion inter carte (91 à 94 respectivement) permet de relier entre eux les bus de chaque carte pour former une batterie série-parallèle connectée à un superviseur (1) interne au boitier de batterie constitué d'un microprocesseur et d'un programme applicatif relié à d'autres équipements par une connectique.

Dans certains modes de réalisation, sur détection d'une température trop élevée d'un module par la carte de gestion (64) BMS d'un bloc modulaire, cette dernière commande la déconnexion du rang d'accumulateur électrique concerné en ouvrant l'organe de coupure (5) pour créer un mode de fonctionnement dégradé en courant pour l'ensemble de batterie série-parallèle, et envoie par le superviseur (1) un message d'alerte à l'utilisateur (conducteur du véhicule ou pilote) ; puis si la température du module diminue après ouverture du circuit, une information de baisse de température est envoyée à l'utilisateur pour permettre à la batterie de rester fonctionnelle, sans que la tension de batterie série-parallèle soit changée.

Dans certains modes de réalisation, l'organe de coupure (5) est relié à une barre connectée à une ligne de pôle, adjacente au pôle positif de l'ensemble, cette barre jouant le rôle de radiateur passif d'évacuation de la chaleur des cellules (10, 11, 12, 13, 14, 15, 16, 17) par ses dimensions choisies en conséquence.

Dans certains modes de réalisation, le dispositif de disjonction (5), représenté par exemple sur [Fig. 8] et [Fig. 9], est relié d'une part au pôle négatif ou positif de chaque ensemble de cellules (10, 11, 12, 13, 14, 15, 16, 17) ou chaque batterie, et d'autre part à la cosse négative respectivement positive de la batterie et utilise au moins deux MOSFET M1, M2 ; l'un, M1,avec montage de limitation de sa vitesse de commutation et avec protection de sa grille par une diode Zener branchée en opposition entre la grille et la source, effectuant la coupure en cas de décharge en dessous d'un seuil ou lors d'un court-circuit détecté par le circuit de gestion (64) ; l'autre, M2, effectuant une coupure à la charge en cas de détection par le circuit de gestion (64) de dépassement, de tension ou de température, d'un élément, un montage autour de M2 effectuant également une limitation de courant à la charge.

Dans certains modes de réalisation, le premier MOSFET M1 est connecté par sa source à la borne négative d'un jeu de cellules (10, 11, 12, 13, 14, 15, 16, 17) ou d'éléments unitaires. Ledit MOSFET M1 reçoit sur sa grille, une source de tension (V2) qui pilote M1, ladite source délivrant une tension choisie (par exemple 6 à 10 V ) pour que M1 soit passant, une diode Zener D3, branchée en opposition entre la grille et la source de M1 et un condensateur C2 protègent la grille du MOSFET de tensions trop élevées ou haute fréquence, et une diode Zener D1 montée en opposition entre la grille de M1 et le drain et en série avec une résistance R3 et une diode D2 en sens passant dans le sens drain grille, D1, D2 et R3 limitant la vitesse de commutation de M1 et un circuit constitué d'une diode (classique) ou une diode Schottky D4 limite le courant de charge, cette diode Schottky D4 est montée en opposition sur le drain de M1 dans le sens de charge, et en série avec un condensateur C1 et une résistance R1 reliés à la borne positive de la batterie pour permettre également de limiter la surtension à l'ouverture de M1, en parallèle sur la diode Schottky D4 est monté une résistance fixe I1 reliée d'une part à la cathode de la diode et d'autre part au drain du deuxième MOSFET M2 dont la source est relié à l'anode de la diode Schottky D4, la grille de M2 étant commandée par une sortie du circuit de détection pour empêcher ou couper la charge.

Dans certains modes de réalisation, le deuxième MOSFET M2 ([Fig. 9]) est branché par sa grille à la base du phototransistor d'un opto-coupleur dont l'émetteur est relié à la source de M2, entre ces deux points sont branchés une diode Zener D5 et un condensateur C5, par la carte BMS, la diode électroluminescente de l'opto-coupleur est branchée par sa cathode à la borne négative de la batterie ou de l'ensemble modulaire de cellules (10, 11, 12, 13, 14, 15, 16, 17) et reçoit sur son anode la commande provenant du circuit de détection BMS et envoyant un courant dans la LED en cas de dépassement de tension ou de température d'un élément relevé.

Dans certains modes de réalisation, pour une batterie 12 V, 15 Ah, la batterie série-parallèle est constituée de m rang de blocs modulaires série connectés en parallèle, chacun des blocs modulaires étant constitué de n cellules (10, 11, 12, 13, 14, 15, 16, 17) lithium assemblées en série (nSmP), nS désignant le nombre d'accumulateurs électriques série et mP désignant le nombre de lignes parallèles, comme cela est représenté par exemple sur [Fig. 1].

Il est à noter que le principe de mesure de la fonction BMS est de s'abstenir d'une mesure de courant. Le principe consiste donc à prélever aux bornes de chaque cellule ou bloc de cellules (10, 11, 12, 13, 14, 15, 16, 17) série une proportion de la tension V_{globale} de chaque cellule ou de chaque ensemble série de cellules (10, 11, 12, 13, 14, 15, 16, 17). Ainsi, chaque pôle de cellule ou de bloc série est relié d'une part sur une extrémité d'un pont diviseur constitué par des résistances (R1, R2), et relié par son autre extrémité à l'autre pôle de cellule ou de bloc modulaire série. La tension proportionnelle prélevée au point commun des résistances est utilisée, soit de façon analogique par un comparateur alimenté sur son autre borne par une tension de référence, soit de façon numérique par un montage intégrateur comme explicité ci-après.

Le principe de mesure via un montage intégrateur tel que décrit dans la présente demande est un principe de mesure d'une tension globale qui permet de remonter à une valeur de courant. Ce principe n'est valable dans le domaine de la batterie que lorsque l'on connaît la résistance interne du générateur de tension. Dans ce cas et uniquement dans ce cas, on peut utiliser ledit montage intégrateur soit en analogique (comme cela est représenté sur [Fig. 7]), soit en numérique (non représenté).

Par exemple, et de manière non limitative, la réponse ou la sortie d'un intégrateur numérique peut être calculée de la manière suivante :
Soit une variation de la tension représentée par x = (-0.25*V_{globale} + 2.5) * pondération, où V_{globale} est une tension obtenue à partir de la tension de la batterie par l'utilisation d'un pont diviseur de tension (R1-R2 ou R9-R4) et « pondération » est une variable qui permet de changer la constante d'intégration. L'équation ci-dessus est modifiable suivant les accumulateurs utilisés.

La sortie ou réponse, y, de l'intégrateur numérique numérique ayant pour forme générale y = Intégration(x), où Intrégration( ) représente le calcul intégral, peut être calculée en utilisant soit comme une première équation de progressivité consistant à prendre la valeur de x, ci-dessus définie, et de l'élever à une puissance paire (2, 4, 6, 8...), par exemple y= x².

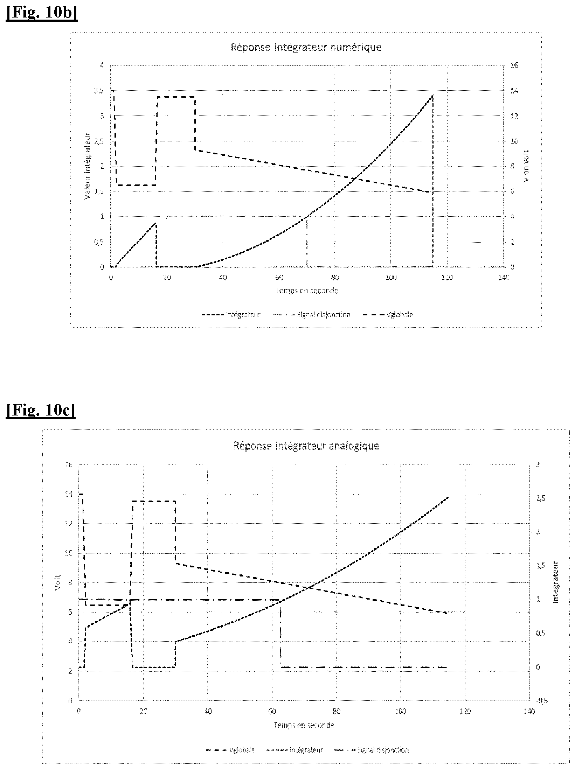

Pour se rapprocher encore plus de l'intégrateur analogique, une seconde équation de progressivité définie, par exemple et de manière non-limitative, par y= Taux *(-ln(x)), avec Taux, une constante d'intégration exprimée en seconde, peut être utilisée. Cette équation permet d'imiter le comportement d'un condensateur dont la tension à ses bornes évolue comme une exponentielle, comme cela est représenté par exemple sur [Fig. 10a] et [Fig. 10c].

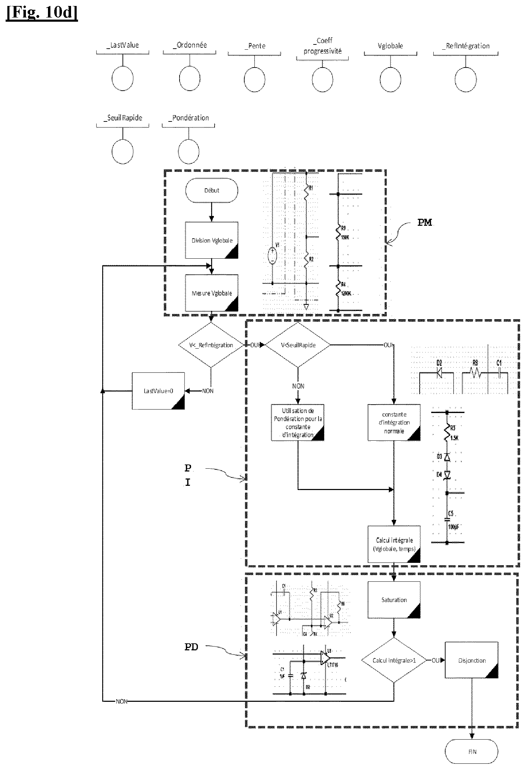

Un logigramme explicitant le programme de calcul de la réponse d'un montage intégrateur numérique selon un mode de réalisation avec mise en parallèle des modes de réalisation analogiques est représenté par exemple sur [Fig. 10d], il représente un diagramme de calcul de la réponse d'un intégrateur numérique selon la seconde équation de progressivité. Chaque étape de calcul représente les composants du dispositif de détection pouvant être impliqués dans les opérations de calcul. Le diagramme peut être divisé en trois phases : une phase de mesure (PM) et comparaison, une phase d'intégration (PI) et une phase de disjonction (PD).

Dans la phase de mesure (PM), le pont diviseur de tension R1-R2 (ou R9-R4 , [Fig. 7b]) permet de déterminer une mesure V=Vglobale de la tension à l'entrée du dispositif de détection à partir de la tension V1 de la batterie.

La variable «Ref_{intégration} » est la référence d'intégration et correspond à une valeur de la tension en dessous de laquelle, le signal d'entrée V sera intégré. Si la tension V est supérieure à la variable « Ref_{intégration} », on se trouve dans une situation ou la batterie fonctionne normalement. Si V est inférieure à la variable « Ref_{intégration} », la batterie fonctionne anormalement et le processus pouvant conduire à la disjonction de ladite batterie est déclenché. Cette variable Ref_{intégration} est donc équivalente à la tension de référence V2. On entre alors dans la phase d'intégration où la réponse de l'intégrateur doit être calculée.

Dans le cas où la tension V est inférieure à la variable « Ref_{intégration} » le programme déclenche soit l'utilisation d'une constante normale d'intégration dans le calcul effectué, soit l'utilisation d'une pondération pour la constante d'intégration. Cette pondération comme représenté dans le cadre PI est utilisée si la tension est inférieure à une deuxième variable de comparaison appelée « SeuilRapide » qui permet de définir un seuil de tension à partir duquel la variable « pondération » (ci-dessus définie) est utilisée dans le calcul de la variation de la tension ou non. Par exemple, et de manière non-limitative, la variation de la tension a une forme générale de type x = (pente * Vglobale+ ordonnée)*pondération.

Si la différence ou variation de la tension d'entrée V, dV, entre un instant t1 et un instant t2 (ou entre deux mesures successives de la tension V), définie par dV = |V(t2)-V(t1)|, est supérieure à la variable « SeuilRapide », la variable « pondération » prend par exemple la valeur 5. Si, au contraire, ladite différence ou variation de la tension V, dV, est inférieure à la variable « SeuilRapide », la variable « pondération » prend la valeur 1. Ce qui correspond à utiliser une constante d'intégration normale.

Le pas de temps de mesure de la tension peut être compris, par exemple et de manière non-limitative, entre 1ms à 100 ms. La valeur de la variable « SeuilRapide » peut être définie en fonction du pas de temps de mesure et en surveillant la variation de tension entre deux instants t1 et t2, correspondant au dit pas de temps, utilisé pour effectuer les mesures de tension, afin d'améliorer les conditions de détection de conditions anormales. Par exemple, et de manière non-limitative, pour la figure 4B, le pas de temps de mesure utilisé est de 10ms et la valeur de « SeuilRapide » est 0.01 Volt. Ce qui correspond à une chute de tension dV= 0.01 Volt toutes les 10ms.

Les variables « Ordonnée », « Pente », obtenues par mémorisation des points de mesure et calcul, par exemple par un fit des données mémorisées de la tension ou par l'utilisation de deux points de la courbe de tension mémorisée entre deux instants t1 et t2 pour déduire la « pente » (pour une variation linéaire de la tension) puis l' « ordonnée », permettent de définir la variation de tension. Dans l'exemple où x= (-0.25*Vglobale + 2.5)*pondération, la pente est -0.25 et l'ordonnée 2.5.

L'étape de comparaison de la variation de tension dV, équivaut à une étape de comparaison de la pente calculée avec la valeur « Seuilrapide » mémorisée soit, pour appliquer, en cas de dépassement par la pente de la valeur « Seuilrapide », un coefficient de pondération (par exemple 5) augmentant l'accélération de l'évolution de l'intégrale pour qu'elle franchisse plus vite le seuil Td de tension de déclenchement, soit en cas de non dépassement un coefficient de pondération sans effet d'accélération (par exemple 1).

Une fois que la variation de la tension est obtenue, le signal est intégré selon la seconde équation de progressivité par exemple. Le signal de sortie correspond ainsi à l'intégration du signal d'entrée.

La variable « Coeff progressivité » correspond à une constante d'intégration (Taux dans la seconde équation de progressivité).

Dans le mode de réalisation, par intégrateur numérique, l'homme de métier comprendra que le montage utilisant les comparateurs U1 et U2 est remplacé par un microprocesseur jouant le rôle d'un comparateur numérique (Un). Ledit microprocesseur est équipé d'une mémoire de stockage permettant la mémorisation des variables de seuil « Ref_{intégration} » et « SeuilRapide » et les variables de calcul « Ordonnée », « Pente» définies en fonction de ces seuils.

Comme cela est représenté par exemple sur [Fig. 10b], la réponse d'un montage intégrateur numérique fonctionne selon un logigramme, par exemple le logigrame représenté sur [Fig. 10d], selon un mode de réalisation utilisé avec une batterie de 16 Volts et une tension de déclenchement Td de 12Volts.

La mémoire contient également le programme de calcul permettant la collecte des points de courbe de tension (V_{globale}, ...), les comparaisons et décisions, la mise en oeuvre des équations, l'intégration et les décisions représentées dans le logigramme de [Fig. 10b]. Le circuit numérique reçoit seulement en entrée la tension V_{globale} provenant du point commun d'un pont diviseur entre une résistance R1 et résistance R2 et effectue des mesures selon une fréquence déterminée pour observer la courbe de tension V_{globale}, puis à partir de la détection du franchissement du seuil « Ref_{intégration} » qui, sur l'exemple représenté sur [Fig. 10b] est choisi inférieur à 3 Volts par élément cellulaire ou 12 volts pour une batterie de 4 éléments cellulaires en série à partir de cette Tension de référence V2 le programme du microprocesseur, déclenche les calculs pour obtenir la comparaison avec la variable « SeuilRapide » de la variation dV de la tension V_{globale} entre deux instants successifs t1 et t2 (ou entre deux mesures successives), afin de déterminer l'utilisation ou non d'une variable « Pondération ». Ainsi dans le cas d'un démarrage entraînant une chute importante de la tension de 14 à presque 6 Volts, la variable « SeuilRapide » est par exemple, et de manière non-limitative, fixée à 0.01 Volt dans l'exemple représenté sur [Fig. 10b]. La variable « Seuilrapide » sera franchie et l'intégration se fera avec une pondération pour éviter une coupure trop rapide empêchant le démarrage. Sur le diagramme représenté sur [Fig. 10b], on observe que la tension batterie ayant chuté rapidement à presque 6 Volts et restant constante pendant environ 18 secondes, le circuit numérique intègre la valeur constante en une droite qui reste en dessous de la tension de détection ou déclenchement Td qui est choisie à 1 Volt. La réponse de l'intégrateur ou tension de sortie peut être, par exemple et de manière non-limitative, obtenue avec un programme tel que celui définie en annexe de la présente demande où la variable «tensionGenerale» correspond à la tension V_{globale} à un instant t1 = t et, la variable «LastTensionGenerale» représente la valeur de la tension V_{globale} à l'instant t2=t-1. La variable «ORDONNEE_ORIGINE» correspond à la variable «Ordonnée» définie ci-dessus et la variable «lastIntegratedValue» correspond au calcul intégral ou la réponse de l'intégrateur.

Le calcul de l'intégrale ou de la réponse de l'intégrateur peut comprendre la prise en compte des variables « Pente et/ou Ordonnée » calculées par le microprocesseur à partir des données de la courbe de tension V_{globale} enregistrée.

L'intégration se déclenche dès que la tension globale V_{globale} passe en dessous de V2= Ref_{intégration}= 9 Volts.

Ensuite, au cours de son utilisation, la tension de la batterie chute brutalement de 14 Volts à environ 9 Volts puis décroit lentement dans le temps selon une droite jusqu'à 6 Volts. L'ordonnée de la droite est environ 2,3 Volts et la pente est moins élevée que précédemment et la variation dV de la tension entre deux mesures successives peut être supérieure (en fonction de la valeur de la pente) à la variable « Seuilrapide » (par exemple 0.01Volt dans l'exemple représenté sur [Fig. 10b]).

Lorsque la valeur en sortie de l'intégration atteint le seuil correspondant à la tension de détection ou déclenchement Td de 1volt, le déclenchement de la coupure est réalisé.

Enfin dans la version ou variante numérique, lors de court-circuit, la tension V_{globale} chute très rapidement à une valeur très faible, un seuil de détection de court-circuit est mémorisé et dès que le programme exécuté par le processeur détecte le franchissement de ce seuil, il active le signal de déclenchement de la disjonction.

[Fig. 10b] illustre la réponse ou signal de sortie d'un intégrateur numérique selon l'exemple décrit ci-dessus. L'intégrateur numérique présente un comportement qui se rapproche de celui d'un intégrateur analogique, comme cela est représenté par exemple sur [Fig. 10c], dans l'intervalle de temps compris entre t=40s et environ t=120 s, avec une batterie de 16 Volts et une tension de déclenchement T_{d} de 12 volts.

Dans la phase de disjonction, le calcul de la réponse est utilisé pour vérifier si une disjonction doit être déclenchée (ou activée) ou pas. La disjonction est activée lorsque la réponse de l'intégrateur est supérieure à un seuil donné correspondant à la tension de détection ou déclenchement Td. Dans l'exemple ci-dessus, illustré par [Fig. 10b], [Fig. 10c] et [Fig. 10d], ce seuil est fixé à 1 ou 1,24 Volts environ. Par exemple et de manière non limitative, la valeur du seuil peut être normalisée à 1.

Ainsi le BMS comprend au moins un dispositif de détection de décharges profondes, de surintensité et de court-circuit dans chaque élément unitaire ou ensemble modulaire de la batterie et comprend au moins un dispositif BMS; le dispositif de détection étant unique et comprenant un comparateur U1 qui compare directement une tension proportionnelle, dans un rapport déterminé, à celle de l'élément unitaire ou de l'ensemble modulaire, sans utiliser un shunt résistif, pour la comparer à une tension de référence V2 pour activer ou non la disjonction de la batterie en fonction des variations de la tension de l'élément unitaire ou de l'ensemble modulaire, le rapport de proportion entre la tension mesurée et celle de référence correspond au rapport entre la tension de référence V2 et la tension de déclenchement T_{d} à partir de laquelle le dispositif de disjonction est actionné.

Dans une variante du BMS, un microprocesseur équipé d'au moins une mémoire de stockage permet la mémorisation d'au moins une variable de seuil « Réf_{intégration} » et d'une valeur de tension de détection mémorisée T_{d}, la mémoire contient également le programme exécuté par le microprocesseur permettant la collecte des points de courbe de tension V_{globale}, les comparaisons des tensions V_{globale} avec « Ref_{intégration} » et de l'intégrale de tension calculée (V_{integ}) avec T_{d} et décisions, la mise en oeuvre des équations permettant l'intégration, le microprocesseur recevant en entrée la tension V_{globale} provenant du point commun d'un pont diviseur de résistances branchées entre les deux pôles de la cellule ou de l'ensemble de cellules (10, 11, 12, 13, 14, 15, 16, 17) et mémorise les mesures selon une fréquence déterminée pour observer la courbe de tension V_{globale}, et comparer les valeurs de la courbe de tension V_{globale} à la valeur « Ref_{intégration} », puis à partir de la détection du franchissement du seuil « Ref_{intégration} », défini par la valeur mémorisée dans la mémoire, déclenche les calculs d'intégration de la courbe V_{global} et compare les valeurs de la courbe d'intégration (V_{integ}) calculée à une valeur de tension de détection mémorisée T_{d} pour activer le dispositif de disjonction effectuant la coupure.

Selon une variante, la mémoire comporte également la valeur d'une variable « SeuilRapide » mémorisée pour déterminer par comparaison de la tension V_{globale} instantanée avec le « SeuilRapide » si le calcul de l'intégrale de la courbe de tension V_{globale} doit prendre en compte ou pas un coefficient de pondération.

Selon une autre variante, le calcul de l'intégrale peut prendre en compte des variables « Pente et/ou Ordonnée », calculées par le microprocesseur à partir des données de la courbe de tension V_{globale} enregistrée.

Dans certains modes de réalisation, la fonction de gestion BMS comporte un dispositif de détection, comme cela est représenté par exemple sur [Fig. 7], qui est unique, comprenant un comparateur U1 qui compare directement une tension proportionnelle, dans un rapport déterminé, à celle de l'élément unitaire ou de l'ensemble modulaire, sans utiliser un shunt résistif, pour la comparer à une tension de référence V2 pour activer ou non la disjonction par le circuit de disjonction (5) de la cellule ou du groupe de cellules (10, 11, 12, 13, 14, 15, 16, 17) en fonction des variations de la tension de l'élément unitaire ou de l'ensemble modulaire, le rapport de proportion entre la tension mesurée et celle de référence correspond au rapport entre la tension de référence V2 et la tension de déclenchement Td à partir de laquelle il est choisi que le dispositif de disjonction soit actionné.

Dans un autre mode de réalisation, le dispositif de détection, représenté par exemple sur [Fig. 7a, Fig. 7b], comprend au moins autour d'un comparateur U1 un pont diviseur (R1, R2, ou R9, R4) monté entre les bornes de l'ensemble modulaire de la batterie ou d'une cellule unitaire de la batterie dont le point commun aux résistances est relié à l' entrée de la borne négative du comparateur U1 pour fournir une tension dont la valeur est proportionnelle à la valeur de tension V1 aux bornes de la batterie, dans le rapport défini par les valeurs des deux résistances (R1, R2, ou R9, R4), et de la borne positive du comparateur est reliée à une diode ou une cellule d'alimentation (non représentées) pour définir la tension de référence V2.

Dans un autre mode de réalisation, un montage intégrateur, représenté par exemple sur [Fig. 7a], comprend une résistance R5 branchée entre le point commun du pont diviseur R1, R2 et l'entrée négative du comparateur U1 et un ensemble, résistance R8, condensateur C1 montés en série par une borne commune, est branché par l'autre borne de C1 à la sortie du comparateur U1 et l'autre borne de R8 est reliée au point commun aux deux résistances R5, R8 et à l'entrée négative de U1 les valeurs R5 et C1 sont ajustées pour régler le temps d'intervention de la disjonction avant la détérioration de la batterie en cas de détection de surintensité.

Dans un autre mode de réalisation, le dispositif de détection comprend un condensateur C3, représenté par exemple sur [Fig. 7], monté en parallèle de R2 qui combiné avec R1 forme un filtre pour filtrer des perturbations à haute fréquence et fixer un temps minimum de disjonction.

Dans un autre mode de réalisation un circuit comparateur U2, représenté par exemple sur [Fig. 7a], à hystérésis, disposé en aval du circuit comparateur U1, comprend un montage à hystérésis autour de l'amplificateur U2 qui reçoit à l'entrée de sa borne négative la valeur de la tension de la sortie de l'amplificateur U1.

L'invention concerne également un ensemble de batteries série-parallèle, dont les cellules (10, 11, 12, 13, 14, 15, 16, 17) choisies sont des éléments au lithium de 3,3 V chacun et 2,5 Ah.

Dans certains modes de réalisation, chaque module du bloc modulaire série comporte un ensemble de trois cartes électroniques reliées entre elles, assurant une fonction de gestion « BMS » élargie pour disposer en fonctionnement dit normal au moins une ou plusieurs des fonctionnalités suivantes :
Equilibrage de la tension des cellules (10, 11, 12, 13, 14, 15, 16, 17) ;
Comparaison des seuils de tension de chaque accumulateur électrique ;
Alimentation des réchauffeurs (62ₙ) d'accumulateur électrique en cas de température négative ;
Mesure de la température du module gérée par la carte BMS ;
Protection contre les courts-circuits par détection de court-circuit et protection contre une décharge lente et profonde par détection d'une décharge lente et profonde, et ouverture de l'organe de coupure (5) constitué soit d'au moins un MOSFET, soit d'un élément électromagnétique ;
Limitation du courant de charge par ouverture du MOSFET intervenant dans le circuit de charge de façon à préserver la longévité des accumulateurs électriques ;
Calcul de l'état de charge et de santé des accumulateurs électriques ;
Dialogue avec le circuit pour lui transmettre les informations suivantes :
   Alerte ;
   SOH;
   ON;
   OFF ;
   Ou exécuter les ordres suivants reçus du superviseur :
      ON;
      OFF ;
      Mise en route du réchauffeur (62ₙ).

Dans certains modes de réalisation, sur détection par le superviseur (1) d'un défaut d'équilibrage des courants entre modules par observation par le superviseur (1) d'une ligne d'accumulateur électrique (17) avec un courant hors limite, un écart trop important avec les autres indiquant que cette ligne fatigue, déclenche par le superviseur l'envoi d'un message « maintenance » de la batterie au conducteur du véhicule ou au pilote, permettant de vérifier l'état de la batterie et d'éviter une panne.

Dans certains modes de réalisation, la carte mettant en oeuvre les fonctions de gestion (BMS) a les caractéristiques de temps de réaction suivantes :
Détection d'un court-circuit : temps d'ouverture de 75 ms ;
Détection du courant maximum admissible : temps d'ouverture de 10 secondes ;
Détection d'une décharge correspondant à 10°C : 10 fois la capacité de la batterie, c'est-à-dire que pour une batterie de 10Ah, la décharge est à 100 Ah et le temps d'ouverture du circuit est de 5 minutes 30 ;
Détection d'une décharge correspondant à 1°C : le temps d'ouverture du circuit est de 60 minutes.

Dans certains modes de réalisation, chaque carte BMS intègre une surveillance de la température qui reste constamment active, même si la batterie est sur « OFF », en analysant par le superviseur la température dans l'enveloppe de la batterie, mesurée par une sonde (non représentée) montée sur la partie centrale (62n) des cartes de chaque module supportant les résistances de chauffage (62), cette sonde étant associée à un montage électronique (non représenté) servant à prévenir par un message sur un écran LCD ou par un bip sonore, même lorsque la batterie est sur étagère.

Dans certains modes de réalisation, chaque carte BMS utilise pour la limitation du courant de charge, un composant de type une résistance, qui est passant dans le sens de la décharge de la batterie et résistif comme une diode montée en opposition dans le sens de charge.

L'invention apporte donc dans une architecture modulaire un ou plusieurs circuits de gestion BMS, interne à la batterie, surveillant à partir des tensions tous les accumulateurs électriques à la fois, sans multiplier les câblages.

### Annexe à la description :

Il correspond à un exemple, non-limitatif, de programme d'un intégrateur numérique pour implémenter la réponse de l'intégrateur de la figure 10b:

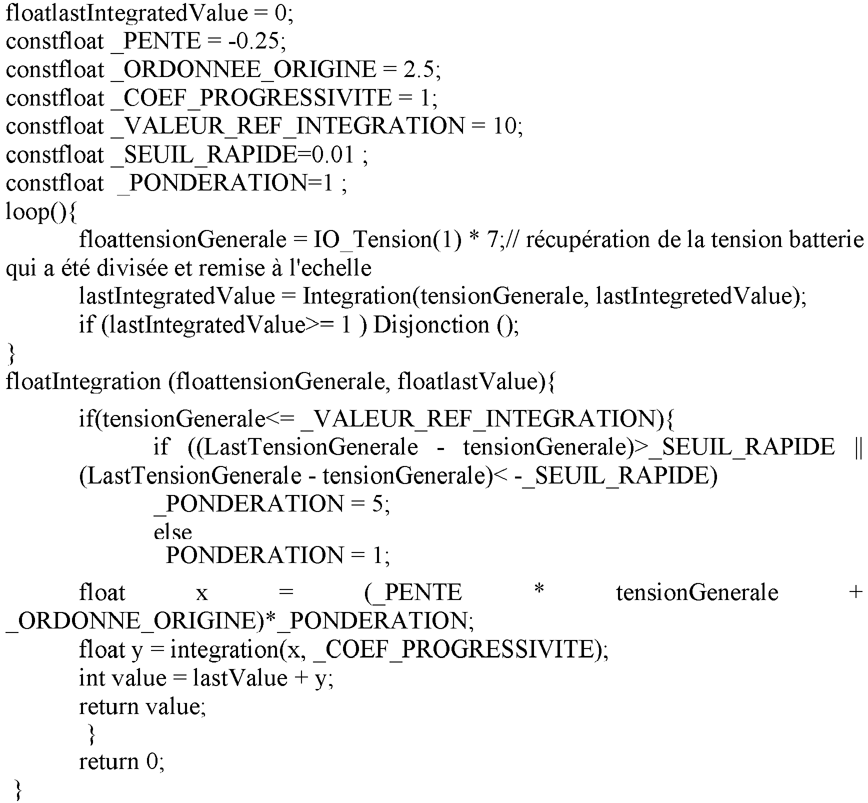

## Revendications

1. Bloc modulaire série (BIMoSe) constitué de cellules (10, 11, 12, 13, 14, 15, 16, 17) d'accumulateurs lithium disposées selon une direction verticale (V), ces cellules (10, 11, 12, 13, 14, 15, 16, 17) de mêmes caractéristiques sont reliées en série par des connexions selon une direction donnée (S) correspondant au sens des courants pour obtenir la tension nécessaire, **caractérisé en ce que** le bloc modulaire série comprend selon la même direction (V) une paire d'éléments supérieur (81) et inférieur (71) de maintien de cellules (10, 11, 12, 13, 14, 15, 16, 17) adjacentes et perpendiculairement à la direction S;
des languettes (30ₙ) larges reliant, sur chaque face supérieure ou inférieure du module, chaque paire de cellules (10, 11, 12, 13, 14, 15, 16, 17) adjacentes montées en série chacune avec la suivante par leurs pôles de polarité opposés,
selon la direction S, assurent les connexions entre les cellules (10, 11, 12, 13, 14, 15, 16, 17) d'accumulateur, lesdites languettes larges de chaque face supérieure, respectivement inférieure, étant décalées d'une cellule sur l'autre face inférieure, respectivement supérieure ;
les connexions étant reliées également à un circuit de traitement pour mesurer les potentiels de chaque cellule, le circuit étant monté sur un ensemble de circuit imprimé formant trois surfaces disposées en U, ledit ensemble en forme de U enveloppant l'ensemble modulaire de batteries sur trois côtés, ledit ensemble en forme de U étant disposé de sorte que la normale à la partie centrale du U est perpendiculaire à la direction S et à la direction verticale V et,
la face externe de la partie centrale du U comporte l'électronique du système de gestion du bloc modulaire (BIMoSe) ;
au moins une carte du système de contrôle des batteries d'accumulateurs ou Battery Management System (BMS), formant la partie centrale du U, disposée verticalement comporte les résistances (62) de réchauffement du bloc modulaire et ces résistances sont connectées sur commande du circuit de gestion à une ou plusieurs cellules (10, 11, 12, 13, 14, 15, 16, 17) d'accumulateur du bloc modulaire pour leur alimentation ;
la partie inférieure du U disposée sous les cellules (10, 11, 12, 13, 14, 15, 16, 17) contribue avec la partie supérieure du U au moins à la récupération des potentiels de chacune des cellules (10, 11, 12, 13, 14, 15, 16, 17) du bloc modulaire pour les fournir au circuit de gestion des tensions du système de gestion du bloc modulaire.

2. Bloc modulaire série selon la revendication 1, **caractérisé en ce que** la partie centrale comporte des sondes de températures et un thermostat.

3. Bloc modulaire série selon la revendication 1 ou 2, **caractérisé en ce que** le contact ouvert/fermé d'un organe de coupure (5) est relié d'une part au pôle positif ou négatif de chaque dernière cellule d'accumulateur d'un bloc modulaire et d'autre part à la cosse respectivement positive ou négative de la batterie, l'organe de coupure (5) étant un MOSFET ou un élément électromagnétique.

4. Bloc modulaire série selon l'une des revendications 1 à 3, **caractérisé en ce que** chaque carte BMS de chaque bloc modulaire comporte un bus numérique et un bus analogique reliés à une connectique permettant de relier entre eux les bus d'une pluralité (n) de cartes BMSₙ appartenant à une pluralité de blocs modulaires série (BlMoSeₙ) avec un système superviseur (SU) (1) de l'ensemble de la pluralité de blocs modulaires.

5. Bloc modulaire série selon l'une des revendications 3 à 4, **caractérisé en ce que** le nombre de cellules (10, 11, 12, 13, 14, 15, 16, 17) en série sur une ligne est à choisir, de 1 à X en fonction de la tension souhaitée, la tension maximale souhaitée étant supportée par les composants utilisés dans l'organe de coupure (5) ou la carte BMS.

6. Bloc modulaire série selon la revendication 1, **caractérisé en ce que** les éléments de maintien sont des drageoirs maintenus par des entretoises et délimitant un ensemble de logements cylindriques à section carrée ou polygonale définissant sur chaque drageoir supérieur ou inférieur une ligne de logements recevant chacun une cellule ;
Les languettes forment avec des broches élastiques, par exemple de type Pogo étant appelées pogo pin, un T dont la barre centrale constitue la liaison avec le circuit de traitement pour la récupération des potentiels par la carte supérieure et inférieure.

7. Bloc modulaire série selon l'une des revendications 3 à 6, **caractérisé en ce que** chaque module comporte un ensemble de trois cartes électroniques reliées entre elles, assurant une fonction « BMS », de gestion des éléments d'un bloc modulaire, élargie pour disposer en fonctionnement dit normal d'une ou plusieurs des fonctionnalités suivantes :
Equilibrage de la tension des cellules (10, 11, 12, 13, 14, 15, 16, 17) ;
Comparaison des seuils de tension de chaque accumulateur électrique ;
Alimentation des réchauffeurs d'accumulateur électrique en cas de température négative ;
Mesure de la température du module géré par la carte BMS ;
Protection contre les courts-circuits par détection de court-circuit et protection contre une décharge lente et profonde par détection d'une décharge lente et profonde, et ouverture de l'organe de coupure constitué soit d'au moins un MOSFET, soit d'un élément électromagnétique ;
Limitation du courant de charge par ouverture du circuit de charge de façon à préserver la longévité des accumulateurs électriques ;
Calcul de l'état de charge et de santé des accumulateurs électriques ;
Dialogue avec le circuit pour lui transmettre les informations suivantes :
Alerte ;
SOH (State of Health en anglais ; état de santé en français, c'est-à-dire la disponibilité d'énergie de la batterie) ;
ON ;
OFF ;
Ou exécuter les ordres suivants reçus du superviseur :
ON ;
OFF ;
Mise en route du réchauffeur.

8. Bloc modulaire série selon l'une des revendications 1 à 7, **caractérisé en ce que** la carte BMS a les caractéristiques de temps de réaction suivantes :
Détection d'un court-circuit : temps d'ouverture de 75 ms ;
Détection du courant maximum admissible : temps d'ouverture de 10 secondes ;
Détection d'une décharge correspondant à 10°C : 10 fois la capacité C de la batterie, c'est-à-dire que pour une batterie de 10 Ah, la décharge est à 100 Ah et le temps d'ouverture du circuit est de 5 minutes 30 ;
Détection d'une décharge correspondant à 1°C : le temps d'ouverture du circuit est de 60 minutes.

9. Bloc modulaire série selon l'une des revendications 1 à 8, **caractérisé en ce que** chaque carte BMS utilise pour la limitation du courant de charge, un composant de type une résistance, qui est passant dans le sens de la décharge de la batterie et résistif comme une diode montée en opposition dans le sens de charge.

10. Bloc modulaire série selon la revendication 9, **caractérisé en ce que** les circuits de composant remplaçables sont remplacés par l'utilisation d'un microcontrôleur dans chaque module et d'un superviseur, soit implémenté dans un des modules soit sur une carte à part mais interne à la batterie, pour permettre :
L'implémentation d'algorithmes du type « machine learning ou deep learning ».

11. Procédé d'utilisation d'un bloc modulaire série comprenant un bloc modulaire série selon l'une des revendications 1 à 10, **caractérisé en ce que** chaque carte BMS intègre une surveillance de la température qui reste constamment active, même si la batterie est sur « OFF », en analysant par le superviseur la température dans l'enveloppe de la batterie, mesurée par une sonde (102) montée sur la partie centrale (62n) des cartes de chaque module pour prévenir par un message sur un écran LCD ou par un bip sonore, même lorsque la batterie est sur étagère.

12. Procédé d'utilisation d'un bloc modulaire série selon la revendication 11, **caractérisé en ce que** les cartes BMS utilisent :
Un bus de donnée numérique pour transmettre les signaux entre chaque module ;
Un ou plusieurs protocoles de communication permettant :
Le monitoring de données telles que la tension d'équilibre, la température ou le courant de chaque module ;
La remontée d'alertes ;
Le suivi de l'état de santé, l'état de charge.

13. Batterie série-parallèle utilisant des Blocs modulaires série selon l'une des revendications 1 à 10, **caractérisé en ce que** une pluralité de blocs modulaires série (BIMoSe) sont assemblés en rang côte à côte et reliés entre eux par deux barres de puissance dont l'une est reliée à chacun des pôles positifs de chaque bloc modulaire et à la cosse externe négative du boitier de batterie et une connexion inter carte (91 à 94 respectivement) permet de relier entre eux les bus de chaque carte pour former une batterie série-parallèle connectée à un superviseur interne au boitier de batterie constitué d'un microprocesseur et d'un programme applicatif et relié à d'autres équipements par une connectique.

14. Batterie série-parallèle selon la revendication 13, **caractérisé en ce que** l'organe de coupure (5) est relié à une barre connectée à une ligne de pôle adjacente au pôle positif de l'ensemble, cette barre jouant le rôle de radiateur passif d'évacuation de la chaleur des cellules (10, 11, 12, 13, 14, 15, 16, 17) par ses dimensions choisies en conséquence.

15. Batterie série-parallèle selon la revendication 14, **caractérisé en ce que** pour une batterie 12 V, 15 Ah, la batterie série-parallèle est constituée de m rang de blocs modulaires série connectés en parallèle, chacun des blocs modulaires étant constitué de n cellules (10, 11, 12, 13, 14, 15, 16, 17) lithium assemblées en série (nSmP), nS désignant le nombre d'accumulateurs électriques série et mP désignant le nombre de lignes parallèles, m et n étant des nombres entiers supérieurs ou égaux à zéro.

16. Ensemble de batteries série-parallèle selon la revendication 14 ou 15, **caractérisé en ce que** les cellules (10, 11, 12, 13, 14, 15, 16, 17) choisies sont des éléments au lithium de 3,3 V chacun et 2,5 Ah.

17. Procédé d'utilisation d'une batterie série-parallèle comprenant une batterie série-parallèle selon la revendication 13, **caractérisé en ce que** sur détection d'une température trop élevée d'un module par la carte BMS d'un bloc modulaire, cette dernière commande la déconnexion du rang d'accumulateur électrique concerné en ouvrant l'organe de coupure (5) pour créer un mode de fonctionnement dégradé en courant pour l'ensemble de batterie série-parallèle, et envoie par le superviseur un message d'alerte à l'utilisateur, par exemple un conducteur de véhicule ou pilote ; puis si la température du module diminue après ouverture du circuit, une information de baisse de température est envoyée à l'utilisateur pour permettre à la batterie de rester fonctionnelle, sans que la tension de batterie série-parallèle soit changée.

18. Procédé d'utilisation selon la revendication 17, d'une batterie série-parallèle selon les revendications 13, 14 et 15, **caractérisé en ce que** sur détection par le superviseur d'un défaut d'équilibrage des courants entre modules par observation par le superviseur d'une ligne d'accumulateur électrique avec un courant hors limite, un écart trop important avec les autres indiquant que cette ligne fatigue, déclenche par le superviseur l'envoi d'un message « maintenance » de la batterie au conducteur du véhicule ou au pilote, permettant de vérifier l'état de la batterie et d'éviter une panne.

## Patentansprüche

1. Serieller modularer Block (BIMoSe), der aus Lithium-Akkuzellen (10, 11, 12, 13, 14, 15, 16, 17) besteht, die entlang einer vertikalen Richtung (V) angeordnet sind, wobei diese Zellen (10, 11, 12, 13, 14, 15, 16, 17) mit denselben Merkmalen in Serie durch Verbindungen gemäß einer gegebenen Richtung (S), die der Richtung der Ströme entspricht, verbunden sind, um die erforderliche Spannung zu erhalten, **dadurch gekennzeichnet, dass** der serielle modulare Block entlang derselben Richtung (V) ein Paar aus einem oberen (81) und einem unteren Halteelement (71) angrenzender und zu der Richtung S senkrecht stehender Zellen (10, 11, 12, 13, 14, 15, 16, 17) umfasst;
breite Laschen (30ₙ), die an jeder oberen oder unteren Fläche des Moduls jedes Paar angrenzender Zellen (10, 11, 12, 13, 14, 15, 16, 17), die jeweils mit der darauffolgenden durch ihre Pole mit entgegengesetzter Polarität in Serie geschaltet entlang der Richtung S montiert sind, verbinden, die Verbindungen zwischen den Akkuzellen (10, 11, 12, 13, 14, 15, 16, 17) sicherstellen, wobei die breiten Laschen jeder oberen bzw. unteren Fläche um eine Zelle auf der anderen unteren bzw. oberen Fläche versetzt sind;
die Verbindungen auch mit einer Verarbeitungsschaltung zum Messen der Potenziale jeder Zelle verbunden sind, die Schaltung auf einer Leiterplatteneinheit montiert ist, die drei im U angeordnete Oberflächen bildet, wobei die Einheit in U-Form den modularen Batteriesatz auf drei Seiten umschließt, wobei die Einheit in U-Form derart angeordnet ist, dass die Senkrechte zu dem zentralen Teil des U zu der Richtung S und zu der vertikalen Richtung V senkrecht ist, und
die äußere Fläche des zentralen Teils des U die Elektronik des Verwaltungssystems des modularen Blocks (BIMoSe) umfasst;
wobei mindestens eine Karte des Steuersystems der Akku-Batterien oder Batterieverwaltungssystem (BMS), die den zentralen Teil des U bildet, der vertikal angeordnet ist, die Widerstände (62) zum Erwärmen des modularen Blocks umfasst, und diese Widerstände auf Befehl der Verwaltungsschaltung mit einer oder mehreren Akkuzellen (10, 11, 12, 13, 14, 15, 16, 17) des modularen Blocks für ihre Versorgung verbunden werden;
der untere Teil des U, der unter den Zellen (10, 11, 12, 13, 14, 15, 16, 17) angeordnet ist, mit dem oberen Teil des U mindestens zur Rückgewinnung der Potenziale jeder der Zellen (10, 11, 12, 13, 14, 15, 16, 17) des modularen Blocks beiträgt, um sie an die Verwaltungsschaltung der Spannungen des Verwaltungssystems des modularen Blocks zu liefern.

2. Serieller modularer Block nach Anspruch 1, **dadurch gekennzeichnet, dass** der zentrale Teil Temperatursonden und einen Thermostat umfasst.

3. Serieller modularer Block nach Anspruch 1 oder 2, **dadurch gekennzeichnet, dass** der offene/geschlossene Kontakt eines Trennorgans (5) einerseits mit dem positiven oder negativen Pol jeder letzten Akkumulatorzelle eines modularen Blocks und andererseits mit der positiven oder negativen Klemme der Batterie verbunden ist, wobei das Trennorgan (5) ein MOSFET oder ein elektromagnetisches Element ist.

4. Serieller modularer Block nach einem der Ansprüche 1 bis 3, **dadurch gekennzeichnet, dass** jede BMS-Karte jedes modularen Blocks einen digitalen Bus und einen analogen Bus umfasst, die mit einer Verbindungstechnik verbunden sind, die es erlaubt, die Busse einer Vielzahl (n) von Karten BMSₙ, die zu einer Vielzahl serieller modularer Blöcke (BIMoSeₙ) gehören, mit einem Supervisor-System (SU) (1) aller der Vielzahl modularer Blöcke zu verbinden.

5. Serieller modularer Block nach einem der Ansprüche 3 bis 4, **dadurch gekennzeichnet, dass** die Anzahl von Zellen (10, 11, 12, 13, 14, 15, 16, 17) in Serie auf einer Reihe von 1 bis X in Abhängigkeit von der gewünschten Spannung ausgewählt werden muss, wobei die maximale gewünschte Spannung von den Bauteilen unterstützt wird, die in dem Trennorgan (5) oder der BMS-Karte verwendet werden.

6. Serieller modularer Block nach Anspruch 1, **dadurch gekennzeichnet, dass** die Halteelemente Hohlaufnahmen sind, die von Abstandhaltern gehalten werden und eine Einheit zylindrischer Aufnahmen mit quadratischem oder vieleckigem Querschnitt abgrenzen, die auf jeder oberen oder unteren Hohlaufnahme eine Reihe von Aufnahmen, die jeweils eine Zelle aufnehmen, definieren;
die Laschen mit elastischen Stiften, beispielsweise vom Typ Pogo, die Pogo Pin genannt werden, ein T bilden, dessen zentraler Balken die Verbindung mit der Verarbeitungsschaltung zur Rückgewinnung der Potenziale der oberen und unteren Karte bildet.

7. Serieller modularer Block nach einem der Ansprüche 3 bis 6, **dadurch gekennzeichnet, dass** jedes Modul eine Einheit aus drei elektronischen Karten umfasst, die miteinander verbunden sind, die eine "BMS"-Funktion zur Verwaltung der Elemente eines modularen Blocks sicherstellen, die erweitert ist, um im sogenannten ordnungsgemäßen Betrieb über eine oder mehrere der folgenden Funktionen zu verfügen:
Ausgleich der Spannung der Zellen (10, 11, 12, 13, 14, 15, 16, 17);
Vergleich der Spannungsschwellenwerte jedes elektrischen Akkus;
Versorgung der Erwärmer für elektrischen Akku im Falle von Minustemperatur;
Temperaturmessung der von der BMS-Karte verwalteten Temperatur;
Schutz vor Kurzschluss durch Kurzschlusserfassung und Schutz vor einer langsamen und tiefen Entladung durch Erfassung einer langsamen und tiefen Entladung, und Öffnen des Trennorgans, das entweder aus mindestens einem MOSFET oder aus einem elektromagnetischen Element besteht;
Einschränkung des Ladestroms durch Öffnen der Ladeschaltung derart, dass die Langlebigkeit der elektrischen Akkumulatoren gewahrt wird;
Berechnung des Ladezustands und des Gesundheitszustands der elektrischen Akkumulatoren;
Dialog mit der Schaltung, um ihr die folgenden Informationen zu übertragen:
Warnung;
SOH (State of Health im Angelsächsischen; Gesundheitszustand im Deutschen, das heißt Energieverfügbarkeit der Batterie);
ON;
OFF;
oder Ausführen der folgenden von dem Supervisor empfangenen Befehle:
ON;
OFF;
Inbetriebnahme des Erwärmers.

8. Serieller modularer Block nach einem der Ansprüche 1 bis 7, **dadurch gekennzeichnet, dass** die BMS-Karte die folgenden Ansprechzeitmerkmale aufweist:
Erfassung eines Kurzschlusses: Öffnungszeit 75 ms;
Erfassung des zulässigen Höchststroms: Öffnungszeit 10 Sekunden;
Erfassung einer Entladung, die 10 °C entspricht: 10 Mal die Kapazität C der Batterie, das heißt, dass für eine Batterie mit 10 Ah die Entladung bei 100 Ah erfolgt und die Öffnungszeit der Schaltung 5 Minuten 30 beträgt;
Erfassung einer Entladung, die 1 °C entspricht: die Öffnungszeit der Schaltung beträgt 60 Minuten.

9. Serieller modularer Block nach einem der Ansprüche 1 bis 8, **dadurch gekennzeichnet, dass** jede BMS-Karte zur Einschränkung des Ladestroms ein Bauteil vom Typ eines Widerstands verwendet, der in die Entladerichtung der Batterie durchlässig ist und resistiv wie eine Diode, die der Laderichtung gegenläufig montiert ist.

10. Modularer serieller Block nach Anspruch 9, **dadurch gekennzeichnet, dass** die Schaltungen mit austauschbaren Bauteilen durch Verwendung eines Mikrocontrollers in jedem Modul und eines Supervisors ersetzt werden, der entweder in einem der Module oder auf einer separaten Karte aber innerhalb der Batterie implementiert wird, um Folgendes zu erlauben:
die Implementierung von Algorithmen vom Typ "Machine Learning" oder "Deep Learning".

11. Verfahren zur Verwendung eines modularen seriellen Blocks, der einen modularen seriellen Block nach einem der Ansprüche 1 bis 10 umfasst, **dadurch gekennzeichnet, dass** jede BMS-Karte eine Überwachung der Temperatur integriert, die ständig aktiv bleibt, selbst wenn die Batterie auf "OFF" ist, indem der Supervisor die Temperatur im Mantel der Batterie analysiert, die von einer Sonde (102) gemessen wird, die auf dem zentralen Teil (62n) der Karten jedes Moduls montiert ist, um durch eine Nachricht auf einem LCD-Bildschirm oder durch einen akustischen Piepton zu warnen, selbst wenn sich die Batterie auf einem Regal befindet.

12. Verfahren zur Verwendung eines modularen seriellen Blocks nach Anspruch 11, **dadurch gekennzeichnet, dass** die BMS-Karten Folgendes benutzen:
einen digitalen Datenbus zum Übertragen der Signale zwischen Modulen;
ein oder mehrere Kommunikationsprotokolle, die Folgendes erlauben:
die Überwachung von Daten wie der Gleichgewichtsspannung, der Temperatur oder des Stroms jedes Moduls;
die Weiterleitung von Warnungen;
die Verfolgung des Gesundheitszustands, des Ladezustands.

13. Seriell-parallele Batterie, die serielle modulare Blöcke nach einem der Ansprüche 1 bis 10 umfasst, **dadurch gekennzeichnet, dass** eine Vielzahl serieller modularer Blöcke (BIMoSe) in Serie Seite an Seite zusammengefügt und miteinander durch zwei Stromschienen geschaltet sind, von welchen die eine mit jedem der positiven Pole jedes modularen Blocks und der externen negativen Klemme des Batteriegehäuses verbunden ist, und eine Verbindung zwischen Karten (91 bzw. 94) es erlaubt, die Busse jeder Karte miteinander zu verbinden, um eine seriell-parallele Batterie zu bilden, die mit einem Supervisor innerhalb des Batteriegehäuses verbunden ist, der aus einem Mikroprozessor und einem Anwendungsprogramm besteht und mit anderen Ausrüstungen durch Verbindungstechnik verbunden ist.

14. Seriell-parallele Batterie nach Anspruch 13, **dadurch gekennzeichnet, dass** das Trennorgan (5) mit einer Schiene verbunden ist, die mit einer Polleitung angrenzend an den positiven Pol der Einheit verbunden ist, wobei diese Schiene aufgrund ihrer entsprechend ausgewählten Abmessungen die Aufgabe eines passiven Wärmeableitungskühlers der Zellen (10, 11, 12, 13, 14, 15, 16, 17) übernimmt.

15. Seriell-parallele Batterie nach Anspruch 14, **dadurch gekennzeichnet, dass** für eine 12-V-Batterie mit 15 Ah die seriell parallele Batterie aus m Reihen serieller modularer Blöcke besteht, die parallel geschaltet sind, wobei jeder der modularen Blöcke aus n Lithiumzellen (10, 11, 12, 13, 14, 15, 16, 17) besteht, die in Serie (nSmP) zusammengefügt sind, wobei nS die Anzahl serieller elektrischer Akkus bezeichnet und mP die Anzahl paralleler Reihen bezeichnet, m und n Ganzzahlen größer oder gleich null sind.

16. Seriell-paralleler Batteriesatz nach Anspruch 14 oder 15, **dadurch gekennzeichnet, dass** die ausgewählten Zellen (10, 11, 12, 13, 14, 15, 16, 17) Lithiumzellen mit jeweils 3,3 V und 2,5 Ah sind.

17. Verfahren zur Verwendung einer seriell-parallelen Batterie, das eine seriell-parallele Batterie nach Anspruch 13 umfasst, **dadurch gekennzeichnet, dass** bei Erfassung einer zu hohen Temperatur eines Moduls durch die BMS-Karte eines modularen Blocks diese Letztere das Trennen der betreffenden Reihe elektrischer Akkumulatoren steuert, indem sie das Öffnen des Trennorgans (5) steuert, um einen Strom-Schadbetriebsmodus für den seriell-parallelen Batteriesatz zu schaffen, und durch den Supervisor eine Warnnachricht an den Benutzer sendet, beispielsweise an einen Fahrzeugfahrer oder Piloten; dann, wenn die Temperatur des Moduls nach dem Öffnen der Schaltung sinkt, eine Temperaturabfallinformation an den Benutzer gesendet wird, um es der Batterie zu erlauben, betriebsfähig zu bleiben, ohne dass die Spannung der seriell-parallelen Batterie geändert wird.

18. Verfahren zur Verwendung nach Anspruch 17 einer seriell-parallelen Batterie nach den Ansprüchen 13, 14 und 15, **dadurch gekennzeichnet, dass** bei Erfassung durch den Supervisor eines Ausgleichsfehlers der Ströme zwischen Modulen durch Beobachtung durch den Supervisor einer Reihe elektrischer Akkumulatoren mit einem Strom außerhalb des Limits ein zu großer Unterschied mit den anderen angibt, dass diese Reihe ermüdet, durch den Supervisor das Senden einer Nachricht "Wartung" der Batterie an den Fahrer des Fahrzeugs oder an den Piloten auslöst, was es erlaubt, den Zustand der Batterie zu prüfen und eine Panne zu vermeiden.

## Claims

1. Modular series-connected battery pack (BIMoSe) consisting of lithium battery cells (10, 11, 12, 13, 14, 15, 16, 17) arranged in a vertical direction (V); these cells (10, 11, 12, 13, 14, 15, 16, 17) with the same characteristics are connected in series by connections in a given direction (S) corresponding to the direction of the currents to obtain the necessary voltage, **characterized in that** the modular series-connected battery pack comprises, in the same direction (V), a pair of upper (81) and lower (71) holding elements for holding adjacent cells (10, 11, 12, 13, 14, 15, 16, 17) and perpendicular to the direction S;
wide tongues (30ₙ) connecting, on each upper or lower face of the module, each pair of adjacent cells (10, 11, 12, 13, 14, 15, 16, 17) mounted in series each with the next by their poles of opposite polarity, in the direction S, ensure the connections between the battery cells (10, 11, 12, 13, 14, 15, 16, 17), said wide tongues of each upper, respectively lower, face being offset by one cell on the other lower, respectively upper, face;
the connections being also connected to a processing circuit for measuring the potentials of each cell, the circuit being mounted on a printed circuit assembly forming three surfaces arranged in a U, said U-shaped assembly enveloping the modular battery assembly on three sides, said U-shaped assembly being arranged so that the normal to the central part of the U is perpendicular to the direction S and to the vertical direction V, and
the outer face of the central part of the U comprises the electronics of the management system of the modular battery pack (BIMoSe);
at least one Battery Management System (BMS), forming the central part of the U, arranged vertically, comprises the heating resistors (62) of the modular battery pack and these resistors are connected on command from the management circuit to one or more battery cells (10, 11, 12, 13, 14, 15, 16, 17) of the modular battery pack for their supply;
the lower part of the U arranged under the cells (10, 11, 12, 13, 14, 15, 16, 17) contributes, with the upper part of the U, at least to recovering the potentials of each of the cells (10, 11, 12, 13, 14, 15, 16, 17) of the modular battery pack in order to supply them to the voltage management circuit of the modular battery pack management system.

2. Modular series-connected battery pack according to claim 1, **characterized in that** the central part comprises temperature sensors and a thermostat.

3. Modular series-connected battery pack according to claim 1 or 2, **characterized in that** the open/closed contact of a switching device (5) is connected on the one hand to the positive or negative pole of each last battery cell of a modular battery pack and on the other hand to the positive or negative lug, respectively, of the battery, the switching device (5) being a MOSFET or an electromagnetic element.

4. Modular series-connected battery pack according to one of claims 1 to 3, **characterized in that** each BMS card of each modular block comprises a digital bus and an analog bus that are connected to a connector allowing the buses of a plurality (n) of cards BMSₙ belonging to a plurality of modular series-connected battery packs (BIMoSeₙ) to be connected together, then with a supervisor system (SU) (1) of all of the plurality of modular battery packs.

5. Modular series-connected battery pack according to one of claims 3 to 4, **characterized in that** the number of cells (10, 11, 12, 13, 14, 15, 16, 17) in series on a line is to be chosen from 1 to X depending on the desired voltage, the desired maximum voltage being supported by the components used in the switching device (5) or the BMS card.

6. Modular series-connected battery pack according to claim 1, **characterized in that** the holding elements are bezels held by spacers and delimiting a set of cylindrical housings with a square or polygonal section defining, on each upper or lower bezel, a line of housings each receiving a cell;
the tongues form, with elastic pins, for example of the Pogo type, being called pogo pin, a T whose central bar constitutes the connection with the processing circuit for recovering potentials via the upper and lower card.

7. Modular series-connected battery pack according to one of claims 3 to 6, **characterized in that** each module comprises a set of three interconnected electronic cards, ensuring a BMS function, for managing the elements of a modular battery pack, extended to have one or more of the following features in so-called normal operation:
Cell voltage balancing (10, 11, 12, 13, 14, 15, 16, 17);
Comparison of the voltage thresholds of each electric battery;
Supply of electric battery heaters in case of negative temperature;
Module temperature measurement managed by the BMS card;
Protection against short circuits by short circuit detection and protection against a slow and deep discharge by slow and deep discharge detection, and opening of the switching device consisting either of at least one MOSFET, or of an electromagnetic element;
Limitation of the charging current by opening the charging circuit so as to preserve the longevity of the electric batteries;
Calculation of the state of charge and health of the electric batteries;
Dialog with the circuit to send it the following information:
Alert;
SOH (State of Health, that is to say, the availability of energy from the battery);
ON;
OFF;
Or to execute the following orders received from the supervisor:
ON;
OFF;
Starting the heater.

8. Modular series-connected battery pack according to one of claims 1 to 7, **characterized in that** the BMS card has the following reaction time characteristics:
Detection of a short circuit: opening time of 75 ms;
Detection of the maximum admissible current: opening time of 10 seconds;
Detection of a discharge corresponding to 10°C: 10 times the capacity C of the battery, that is to say, for a 10 Ah battery, the discharge is at 100 Ah and the circuit opening time is 5 minutes 30 seconds;
Detection of a discharge corresponding to 1°C: the circuit opening time is 60 minutes.

9. Modular series-connected battery pack according to one of claims 1 to 8, **characterized in that**, to limit the charging current, each BMS card uses a component of the resistor type, which is conductive in the direction of discharge of the battery and resistive like a diode connected in opposition in the direction of charge.

10. Modular series-connected battery pack according to claim 9, **characterized in that** the replaceable component circuits are replaced by the use of a microcontroller in each module and of a supervisor, either implemented in one of the modules or on a separate card internal to the battery, to allow:
The implementation of algorithms of "machine learning or deep learning" type.

11. Method of using a modular series-connected battery pack according to one of claims 1 to 10, **characterized in that** each BMS card integrates temperature monitoring that remains constantly active, even if the battery is "OFF," by analyzing the temperature in the battery envelope via the supervisor, measured by a probe (102) mounted on the central part (62n) of the cards of each module to warn via a message on an LCD screen or by an audible beep, even when the battery is on the shelf.

12. Method of using a modular series-connected battery pack according to claim 11, **characterized in that** the BMS cards use:
A digital data bus to transmit signals between each module;
One or more communication protocols allowing:
Data monitoring of each module, such as balancing voltage, temperature, current;
Reporting of alerts;
Monitoring health status, state of charge.

13. Series-parallel battery using modular series-connected battery packs according to one of claims 1 to 10, **characterized in that** a plurality of modular series-connected battery packs (BIMoSe) are assembled in a row side by side and interconnected by two power bars, one of which is connected to each of the positive poles of each modular battery pack and to the negative outer lug of the battery box, and an inter-card connection (91 to 94, respectively) makes it possible to link the buses of each card together to form a series-parallel battery connected to an internal supervisor in the battery box consisting of a microprocessor and an application program and connected to other equipment by connectors.

14. Series-parallel battery according to claim 13, **characterized in that** the switching device (5) is connected to a bar connected to a pole line, adjacent to the positive pole of the assembly, this bar acting as a passive radiator for discharging the heat from the cells (10, 11, 12, 13, 14, 15, 16, 17) by its dimensions chosen accordingly.

15. Series-parallel battery according to claim 14, **characterized in that** for a 12 V, 15 Ah battery, the series-parallel battery is made up of m rows of modular series-connected battery packs connected in parallel, each of the modular battery packs being made up of n lithium cells (10, 11, 12, 13, 14, 15, 16, 17) assembled in series (nSmP), nS designating the number of series electric accumulators and mP designating the number of parallel lines, m and n being integers greater than or equal to zero.

16. Set of series-parallel batteries according to claim 14 or 15, **characterized in that** the selected cells (10, 11, 12, 13, 14, 15, 16, 17) are lithium elements of 3.3V each and 2.5 Ah.

17. Method for using a series-parallel battery comprising a series-parallel battery according to claim 13, **characterized in that** on detection of too high a temperature of a module by the BMS card of a modular battery pack, the latter controls the disconnection of the electric battery row concerned by opening the switching device (5) to create a degraded current operating mode for the series-parallel battery assembly, and the supervisor sends an alert message to the user, such as a vehicle driver or pilot; then, if the temperature of the module decreases after opening the circuit, information on the drop in temperature is sent to the user to allow the battery to remain functional, without the series-parallel battery voltage being changed.

18. Method according to claim 17 for using a series-parallel battery according to claims 13, 14 and 15, **characterized in that** when the supervisor detects a fault in the balancing of the currents between modules via observation by the supervisor of an electric battery line with a current out of limit, an excessive difference with respect to the others indicating that this line is fatigued, the series-parallel battery triggers the sending by the supervisor of a "maintenance" message from the battery to the driver of the vehicle or to the pilot, allowing the state of the battery to be checked and a breakdown to be avoided.
